(19) Europäisches Patentamt
European Patent Office
Office européen des brevets

(11) **EP 3 921 285 B1**

(12) **EUROPEAN PATENT SPECIFICATION**

(45) Date of publication and mention of the grant of the patent:
**22.10.2025 Bulletin 2025/43**

(21) Application number: **20769762.4**

(22) Date of filing: **13.03.2020**

(51) International Patent Classification (IPC):
*C02F 1/32* (2023.01)      *C02F 1/467* (2023.01)
*C25B 11/02* (2021.01)

(52) Cooperative Patent Classification (CPC):
**C25B 1/26; C02F 1/325; C02F 1/4674; C25B 11/02; C25B 11/036; C25B 15/02; C25B 15/08;**
C02F 2001/46171; C02F 2201/003; C02F 2301/046; Y02W 10/37

(86) International application number:
**PCT/US2020/022638**

(87) International publication number:
**WO 2020/186162 (17.09.2020 Gazette 2020/38)**

(54) **ELECTROLYZER SYSTEM CONFIGURATIONS FOR ENHANCEMENT OF ULTRAVIOLET ADVANCED OXIDATION PROCESSES**

KONFIGURATIONEN VON ELEKTROLYSESYSTEMEN ZUR VERBESSERUNG VON ULTRAVIOLETT VERWENDENDEN FORTGESCHRITTENEN OXIDATIONSPROZESSEN

CONFIGURATIONS DE SYSTÈME D'ÉLECTROLYSEUR POUR L'AMÉLIORATION DE PROCÉDÉS AVANCÉS D'OXYDATION AUX ULTRAVIOLETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2019 US 201962818137 P**

(43) Date of publication of application:
**15.12.2021 Bulletin 2021/50**

(73) Proprietor: **Evoqua Water Technologies LLC Pittsburgh, PA 15222 (US)**

(72) Inventors:
• **GRIFFIS, Joshua**
  **ASHBURNHAM, Massachusetts 01430 (US)**
• **SATTERFIELD, Benjamin**
  **AYER, Massachusetts 01432 (US)**
• **DUKES, Simon P.**
  **CHELMSFORD, Massachusetts 01824 (US)**

(74) Representative: **Murgitroyd & Company**
  **165-169 Scotland Street**
  **Glasgow G5 8PL (GB)**

(56) References cited:
    CN-A- 107 973 462      FR-B1- 2 994 174
    US-A- 4 136 005      US-A1- 2018 119 295

**Description**

BACKGROUND

1. Field of Invention

The invention relates to a water treatment system comprising an actinic radiation reactor and an electrochemical cell.

2. Discussion of Related Art

Within the last years many research works showed a suitability of Advanced Oxidation Processes (AOPs) for many applications, especially for water treatment (Legrini, O., Oliveros, E., Braun, A. M. (1993). Photochemical Processes for Water Treatment. Chm. Rev. 1093,93,671-698; Bolton et al. (1996). Figures of Merit for the technical development and application of Advanced Oxidation Processes. J. of Advanced Oxidation Technologies, 1,113-17).

Advanced Oxidation Processes (AOPs) for water treatment utilize highly reactive radical species, for example, hydroxyl radicals ($OH^-$), for oxidation of toxic or non or less biodegradable hazardous water contaminants, for example, industrial contaminants.

Due to the high oxidation potential and low selectivity of the hydroxyl radicals, therefore reacting with almost every organic compound, the AOP can be used to eliminate the contaminants, i.e., residuals of pesticides, industrial solvents, PFAS, pharmaceuticals, hormones, drugs, personal care products or x-ray contrast media, from (contaminated) water.

The versatility of an AOP is also enhanced by the fact that they offer different possible ways for the production of hydroxyl radicals, thus allowing a better compliance with specific treatment requirements.

A suitable, traditional, chemical application of AOP to wastewater treatments makes use of expensive reactants/oxidants such as $H_2O_2$ and/or $O_3$ for generating hydroxyl radicals.

Peroxone, as a combination of the oxidants ozone $O_3$ and hydrogen peroxide $H_2O_2$, is known as a new and advanced oxidation process (peroxone AOP) that can be used for the treatment of polluted soils, groundwater and wastewater.

The peroxone process uses the oxidant ozone ($O_3$) combined with the oxidant hydrogen peroxide ($H_2O_2$). During this process the very persistent hydroxyl radicals are formed and react with or oxidize most organic pollutants in a solution. The addition of hydrogen peroxide accelerates the dissolution of ozone, causing the hydroxyl radical concentration to be enhanced. The net free hydroxy radical production rate is about 1 mol per mol of ozone.

Malato et al. (2002). Photocatalysis with solar energy at a pilot-plant scale: an overview. Applied Catalysis B: Environmental 37 1-15 review a use of sunlight to produce hydroxyl radicals.

In an ultraviolet driven AOP (UV AOP) UV radiation is used to generate the hydroxyl radicals by photolysis. Traditional UV driven AOPs for water treatment can be referred to as $UV/H_2O_2$ or UV/Ozone ($UV/O_3$) or their combinations, since $H_2O_2$ or $O_3$ are being photolyzed by UV radiation to produce hydroxyl radicals.

A UV driven chlorine species process as an AOP (UV/chlorine species AOP) producing hydroxyl radicals by irradiating chlorinated solutions with UV is known from Jing Jin et al. (2011). Assessment of the UV/Chlorine process as an advanced oxidation process. Water Research 45, 1890-1896 and Michael J. Watts, et al. (2007). Chlorine photolysis and subsequent OH radical production during UV treatment of chlorinated water. Water Research 41, 2871-2878.

It is further known from Jing Jin et al. (2011). Assessment of the UV/Chlorine process as an advanced oxidation process. Water Research 45, 1890-1896 that such an UV/chlorine AOP could be a treatment option for disinfection by-products (DBPs) that are produced during chlorine disinfection in swimming pools and can be used to inactivate water-borne pathogenic microorganisms and to destroy hazardous organic compounds in drinking water and wastewater.

Other UV AOPs are known as $UV/TiO_2$ or $UV/S_2O_8$ (Legrini, O., Oliveros, E., Braun, A. M. (1993). Photochemical Processes for Water Treatment. Chm. Rev. 1093, 671-698).

Existing AOPs use expensive reactants/oxidants, for example $H_2O_2$ and/or $O_3$, especially in case of the peroxone process AOP using $H_2O_2$ and $O_3$, as well as a high energy demand needed for radical production, for example, a high UV irradiation energy for radical production by an UV AOP. A significant number of radicals are not consumed by oxidation of the contaminants but by side reactions with organic background of a water matrix, e.g., humins, humic acid, or citric acid.

Electrochemical devices that generate chemical reactions at electrodes are widely used in industrial and municipal implementations. Electrochemical reactions for the generation of sodium hypochlorite from sodium chloride and water (electrochlorination) include the following:

| Reaction at anode: | $2Cl^- \rightarrow Cl_2 + 2e^-$ | $(E^0_{ox} = -1.358\ V)$ |
| Reaction at cathode: | $2H_2O + 2e^- \rightarrow H_2 + 2OH^-$ | $(E^0_{red} = -0.8277\ V)$ |
| In solution: | $Cl_2 + 2OH^- \rightarrow ClO^- + Cl^- + H_2O$ | |
| Overall reaction: | $NaCl + H_2O \rightarrow NaOCl + H_2$ | $(E^0_{cell} = -2.19\ V)$ |

The mass generation rate for NaOCl, assuming 100% faradaic efficiency and 3V cell voltage is:

$$1\text{kg NaOCl} = (2 \times 96500 / 3600 \times 1000 / 70.906)\ A*h = 756.09\ A*h$$

In these reactions, electrical potentials listed are under conditions of 1M concentration (activity) of the reactants and products as well as standard condition (25 °C and 1 atm.). CN107973462 A and FR2994174 B1 describe systems of the prior art.

SUMMARY

In accordance with an aspect of the present invention, there is provided a water treatment system according to claim 1.

In some embodiments, the actinic radiation reactor is an ultraviolet advanced oxidation process reactor.

In some embodiments, the electrolyte comprises water.

In some embodiments, the system further comprises a sensor configured to measure a concentration of one or more contaminants in water. The sensor is positioned one of upstream of the actinic radiation reactor or downstream of the actinic radiation reactor. The system may further comprise a controller in communication with the sensor and configured to adjust one or more operating parameters of the system responsive to a measured concentration of the one or more contaminants. The one or more operating parameters may include one of power applied to the electrochemical cell, power applied to the actinic radiation reactor, and flow rate of electrolyte or effluent through one of the electrochemical cell or actinic radiation reactor.

In some embodiments, the system further comprises a source of a chloride salt configured to introduce the salt into the electrolyte upstream of the electrochemical cell. The controller may be further configured to regulate a rate of introduction of the salt into the electrolyte responsive to the measured concentration of the one or more contaminants.

In some embodiments, the system further comprises a controller operatively connected to one or more sensors, the one or more sensors configured to measure one or more of flow rate of the water to be treated, a concentration of a contaminant in the water to be treated, a concentration of sodium hypochlorite in the water to be treated, a purity of product water exiting the actinic radiation reactor, a flow rate of the product water exiting the actinic radiation reactor, or a concentration of sodium hypochlorite in the recirculated brine solution. The controller may be configured to adjust one or more operating parameters of the system based on one or more signals received from the one or more sensors, the one or more operating parameters including one or more of the state of the valve, power applied to the electrochemical cell, power applied to the actinic radiation reactor, flow rate of electrolyte through the electrochemical cell, flow rate of water to be treated through the actinic radiation reactor, or dosage of radiation applied to the water to be treated in the actinic radiation reactor.

In some embodiments, the one or more sensors is configured to measure the concentration of the sodium hypochlorite in the recirculated brine solution and the controller is configured to receive an indication of the concentration of the sodium hypochlorite in the recirculated brine solution from the sensor and send a signal to the valve to at least partially open responsive to the concentration of the sodium hypochlorite being at or above the predetermined level.

In some embodiments, the controller is further configured to set the predetermined level based on one or both of the concentration of the contaminant in the water to be treated or a desired purity of the product water.

In some embodiments, the controller is further configured to set the predetermined level based on a desired dosage of UV radiation to be applied to the water to be treated in the actinic radiation reactor.

In some embodiments, the controller is further configured to set the dosage of UV radiation to be applied to the water to be treated in the actinic radiation reactor based on one or more of the predetermined level, the concentration of the contaminant in the water to be treated, the flow rate of the water to be treated, or a desired purity of the product water.

In some embodiments, the controller is further configured to set the power applied to the electrochemical cell based on one or both of the concentration of the contaminant in the water to be treated or a desired purity of the product water.

In some embodiments, the controller is further configured to set the dosage of UV radiation to be applied to the water to be treated in the actinic radiation reactor based on the concentration of the contaminant in the water to be treated and a desired purity of the product water.

In some embodiments, the controller is further configured to set an amount of chloride to be introduced into the electrolyte based on the predetermined level.

In some embodiments, the controller is further configured to set an amount of power applied to the electrochemical cell based on a desired amount of time within which to achieve the predetermined concentration level of NaOCl in the chlorinated effluent in the recirculation conduit.

In some embodiments, the controller is further configured to set the dosage of UV radiation to be applied to the water to be treated in the actinic radiation reactor based on the power applied to the electrochemical cell.

In accordance with an unclaimed aspect, there is provided a method of treating water in a water treatment system. The method comprises directing water to be treated from a source of water into an inlet of a concentric tube electrode electrochemical cell, applying power across electrodes of the electrochemical cell to convert sodium chloride (NaCl) in the water to be treated to sodium hypochlorite (NaOCl) in the electrochemical cell and form a chlorinated effluent including the NaOCl, directing the chlorinated effluent from an outlet of the electrochemical cell into an inlet of an actinic radiation reactor, exposing the chlorinated effluent to sufficient actinic radiation in the actinic radiation reactor to generate free radicals in the chlorinated effluent which react with contaminants in the chlorinated effluent to form a treated effluent, and directing the treated effluent from an outlet of the actinic radiation reactor to a point of use.

Exposing the chlorinated effluent to actinic radiation in the actinic radiation reactor includes exposing the chlorinated effluent to ultraviolet light in the actinic radiation reactor.

Directing the treated effluent to the point of use includes directing the treated effluent to the source of water.

The method further comprises adding chloride salt to the water to be treated upstream of the inlet of the electrochemical cell.

The method further comprises recirculating the chlorinated effluent through a recirculation conduit from the outlet of the electrochemical cell to the inlet of the electrochemical cell for additional treatment in the electrochemical cell, the additional treatment increasing a concentration of NaOCl in the chlorinated effluent, directing water to be treated from a second source of water to be treated through a first conduit into the inlet of the actinic radiation reactor, and providing selective fluid communication from the recirculation conduit to a point of introduction in the first conduit upstream of the inlet of the actinic radiation reactor. The method may further comprise measuring a concentration of the sodium hypochlorite in the recirculation conduit with a sensor. The method may further comprise receiving, at a controller, an indication of the concentration of the sodium hypochlorite in the recirculation conduit from the sensor, and sending a signal to a valve providing selective fluid communication between the recirculation conduit and the first conduit to at least partially open responsive to the indication of the concentration of the sodium hypochlorite in the recirculation conduit being an indication of the concentration being at or above a predetermined level.

The method further comprises measuring, with one or more sensors operatively connected to a controller of the system, one or more of flow rate of the water to be treated, a concentration of a contaminant in the water to be treated, a concentration of sodium hypochlorite in the water to be treated, a purity of product water exiting the actinic radiation reactor, a flow rate of the product water exiting the actinic radiation reactor, or a concentration of sodium hypochlorite in the recirculated brine solution with one or more sensors. The method may further comprise adjusting, with the controller, one or more operating parameters of the system based on one or more signals received from the one or more sensors, the one or more operating parameters including one or more of a state of the valve, power applied to the electrochemical cell, power applied to the actinic radiation reactor, flow rate of electrolyte through the electrochemical cell, flow rate of water to be treated through the actinic radiation reactor, or dosage of radiation applied to the water to be treated in the actinic radiation reactor.

The method further comprises measuring the concentration of the sodium hypochlorite in the recirculated brine solution with the one or more sensors, receiving, by the controller, an indication of the concentration of the sodium hypochlorite in the recirculated brine solution from one or more sensors, and sending a signal to a valve providing selective fluid communication between the recirculation conduit and the first conduit to at least partially open responsive to the concentration of the sodium hypochlorite being at or above the predetermined level.

The method further comprises setting the predetermined level based on one or both of the concentration of the contaminant in the water to be treated or a desired purity of the product water.

The method further comprises setting the predetermined level based on a desired dosage of UV radiation to be applied to the water to be treated in the actinic radiation reactor.

The method further comprises setting the dosage of UV radiation to be applied to the water to be treated in the actinic radiation reactor based on one or more of the predetermined level, the concentration of the contaminant in the water to be treated, the flow rate of the water to be treated, or a desired purity of the product water.

The method further comprises setting the power applied to the electrochemical cell based on one or both of the concentration of the contaminant in the water to be treated or a desired purity of the product water.

The method further comprises setting the dosage of UV radiation to be applied to the water to be treated in the actinic radiation reactor based on the concentration of the contaminant in the water to be treated and a desired purity of the product water.

The method further comprises setting an amount of chloride to be introduced into the electrolyte based on the predetermined level.

The method further comprises setting an amount of power applied to the electrochemical cell based on a desired amount of time within which to achieve the predetermined concentration level of NaOCl in the chlorinated effluent in the recirculation conduit.

The method further comprises setting the dosage of UV radiation to be applied to the water to be treated in the actinic radiation reactor based on the power applied to the electrochemical cell.

In accordance with another unclaimed aspect, there is provide a method of retrofitting a water treatment system including an advanced oxidation process reactor in fluid communication with a source of water to be treated. The method comprises installing a concentric tube electrochemical cell in fluid communication between the source of water to be treated and the advanced oxidation process reactor and providing instructions to operate the electrochemical cell to convert sodium chloride in the water to be treated to sodium hypochlorite.

The method further comprises providing a sensor configured to measure a concentration of one or more contaminants in water one of upstream of the actinic radiation reactor or downstream of the actinic radiation reactor.

The method further comprises providing a controller in communication with the sensor and configured to adjust one or more operating parameters of the system responsive to a measured concentration of the one or more contaminants.

The one or more operating parameters including one of power applied to the electrochemical cell, power applied to the actinic radiation reactor, and flow rate of electrolyte or effluent through one of the electrochemical cell or actinic radiation reactor.

The method further comprises providing a recirculation conduit configured to return chlorinated effluent from an outlet of the electrochemical cell to an inlet of the electrochemical cell to form a recirculated brine solution.

The method further comprises providing a controller operatively connected to one or more sensors, the one or more sensors configured to measure one or more of flow rate of the water to be treated, a concentration of a contaminant in the water to be treated, a concentration of sodium hypochlorite in the water to be treated, a purity of product water exiting the advanced oxidation process reactor, a flow rate of the product water exiting the advanced oxidation process reactor, or a concentration of sodium hypochlorite in the recirculated brine solution.

The method further comprises configuring the controller to adjust one or more operating parameters of the system based on one or more signals received from the one or more sensors, the one or more operating parameters including one or more of, power applied to the electrochemical cell, power applied to the advanced oxidation process reactor, flow rate of electrolyte through the electrochemical cell, flow rate of water to be treated through the advanced oxidation process reactor, or dosage of radiation applied to the water to be treated in the advanced oxidation process reactor.

BRIEF DESCRIPTION OF DRAWINGS

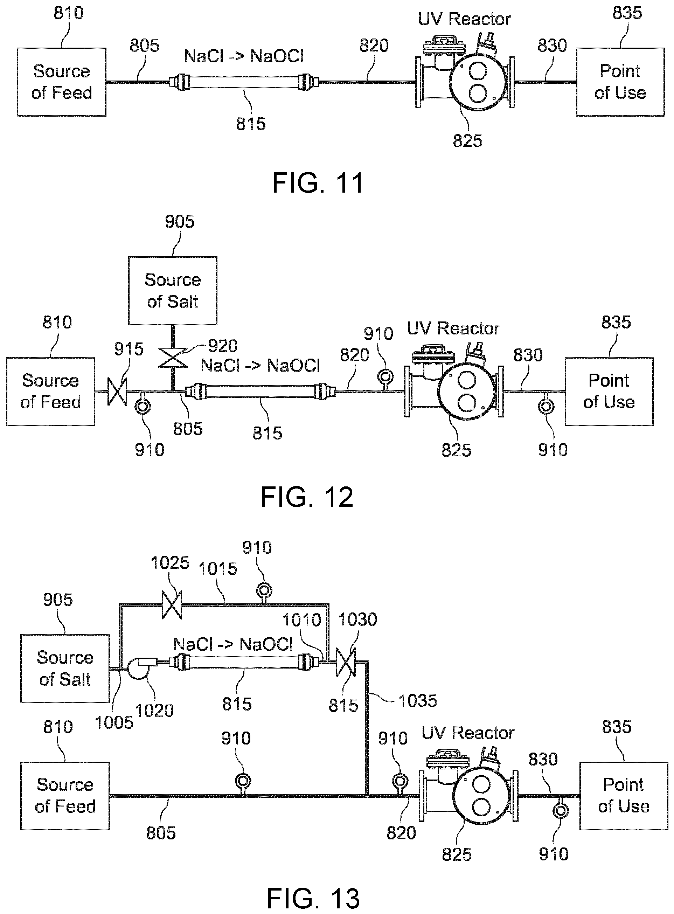

The accompanying drawings are not intended to be drawn to scale. In the drawings, each identical or nearly identical component that is illustrated in various figures is represented by a like numeral. For purposes of clarity, not every component may be labeled in every drawing. In the drawings, only Figure 13 corresponds to a water treatment system according to the invention. The other drawings provide useful information.

FIG. 1A is an isometric view of an example of a concentric tube electrochemical cell;
FIG. 1B is a cross-sectional view of the concentric tube electrochemical cell of FIG. 1A;
FIG. 2A illustrates current flow through an example of a concentric tube electrochemical cell;
FIG. 2B illustrates current flow through another example of a concentric tube electrochemical cell;
FIG. 2C illustrates current flow through another example of a concentric tube electrochemical cell;
FIG. 3 is an isometric view of an example of a single pass spiral wound electrochemical cell;
FIG. 4 is an isometric view of another example of a single pass spiral wound electrochemical cell;
FIG. 5 is a partial cross-sectional view of an example of a three tube concentric tube electrochemical cell;
FIG. 6 is a partial cross-sectional view of an example of a four tube concentric tube electrochemical cell;
FIG. 7 is a partial cross-sectional view of an example of a five tube concentric tube electrochemical cell;
FIG. 8 is a schematic drawing illustrating an actinic radiation reactor vessel in in accordance with one or more examples;
FIG. 9A is a schematic drawing illustrating a portion of an interior of the vessel of FIG. 8 in accordance with one or more examples;
FIG. 9B is a schematic drawing illustrating another portion of an interior of the vessel of FIG. 8 in accordance with one or more examples;
FIG. 10 illustrates results of a test for removing 1, 4-dioxane in an actinic radiation reactor vessel operated under different conditions;

FIG. 11 illustrates an example of system including an actinic radiation reactor vessel and an electrolytic cell upstream of the actinic radiation reactor vessel;

FIG. 12 illustrates another example of system including an actinic radiation reactor vessel and an electrolytic cell upstream of the actinic radiation reactor vessel;

FIG. 13 illustrates an embodiment of system including an actinic radiation reactor vessel and an electrolytic cell upstream of the actinic radiation reactor vessel;

FIG. 14 illustrates a control system that may be utilized for embodiments of water treatment systems disclosed herein;

FIG. 15 illustrates a memory system for the control system of FIG. 14;

FIG. 16 illustrates the arrangement of an electrolytic cell and a recirculation loop used to perform testing regarding the buildup of oxidant in electrolyte recirculated through the cell;

FIG. 17 illustrates results of testing of removing 1, 4-dioxane in an actinic radiation reactor vessel with the contaminated water steam having different pH levels;

FIG. 18 illustrates results of testing of removing 1, 4-dioxane in an actinic radiation reactor vessel with the contaminated water steam having different concentrations of NaOCl;

FIG. 19A illustrates a first set of configurations of water treatment systems as disclosed herein;

FIG. 19B illustrates a second set of configurations of water treatment systems as disclosed herein;

FIG. 20 is a chart illustrating costs associated with generating sodium hypochlorite in different configurations of water treatment systems as disclosed herein; and

FIG. 21 illustrates the relative costs attributable to salt vs. energy for generating sodium hypochlorite in a water treatment system as disclosed herein.

DETAILED DESCRIPTION

Aspects and embodiments disclosed herein are not limited to the details of construction and the arrangement of components set forth in the following description or illustrated in the drawings. Aspects and embodiments disclosed herein are capable of being practiced or of being carried out in various ways. Also, the phraseology and terminology used herein is for the purpose of description and should not be regarded as limiting. The use of "including," "comprising," "having," "containing," "involving," and variations thereof herein is meant to encompass the items listed thereafter and equivalents thereof as well as additional items.

In accordance with at least one aspect, some embodiments thereof can involve a system for purifying or decreasing a concentration of undesirable components (contaminants) in a stream of water. The system can comprise one or more sources of water fluidly connected to at least one actinic radiation reactor. The at least one reactor may be configured to irradiate water from the source of water. The system can further comprise one or more sources of an oxidant. The one or more sources of oxidant can be disposed to introduce one or more oxidants into the water from the one or more water sources.

The actinic radiation reactor may be a reactor including one or multiple ultraviolet (UV) lamps that produce ultraviolet light that, when absorbed by the one or more oxidants, causes free radicals, for example OH⁻ to be produced from the one or more oxidants. The free radicals may oxidize dissolved organic carbon species in the water, for example, trichloromethane or urea, into less undesirable chemical species, for example, carbon dioxide and water. Embodiments of a treatment process for removing undesirable species, for example, organic carbon species from a fluid, for example, water, may be referred to herein an Advanced Oxidation Process (AOP) or a free radical scavenging process. These terms are used synonymously herein.

Aspects and embodiments disclosed herein are generally directed to AOP systems including UV reactors and electrochemical devices to generate oxidants such as sodium hypochlorite for introduction into the UV reactors to facilitate contaminant oxidation in the UV reactors, and to methods of use of such systems.

The terms "electrochemical device," "electrochemical cell," "electrolyzer" and grammatical variations thereof are to be understood to encompass "electrochlorination devices" and "electrochlorination cells" and grammatical variations thereof. Aspects and embodiments disclosed herein are described as including one or more electrodes. The term "metal electrodes" or grammatical variation thereof as used herein is to be understood to encompass electrodes formed from, comprising, or consisting of one or more metals, for example, titanium, aluminum, or nickel although the term "metal electrode" does not exclude electrodes including of consisting of other metals or alloys. In some embodiments, a "metal electrode" may include multiple layers of different metals. Metal electrodes utilized in any one or more of the embodiments disclosed herein may include a core of a high-conductivity metal, for example, copper or aluminum, coated with a metal or metal oxide having a high resistance to chemical attack by electrolyte solutions, for example, a layer of titanium, platinum, a mixed metal oxide (MMO), magnetite, ferrite, cobalt spinel, tantalum, palladium, iridium, silver, gold, or other coating materials. "Metal electrodes" may be coated with an oxidation resistant coating, for example, but not limited to, platinum, a mixed metal oxide (MMO), magnetite, ferrite, cobalt spinel, tantalum, palladium, iridium, silver, gold, or other coating materials. Mixed metal oxides utilized in embodiments disclosed herein may include an oxide or oxides of one or more of ruthenium, rhodium, tantalum (optionally alloyed with antimony and/or manganese), titanium, iridium, zinc, tin, antimony, a titanium-nickel alloy, a titanium-copper alloy, a titanium-iron alloy, a titanium-cobalt alloy, or other appropriate metals or alloys. Anodes utilized in embodiments disclosed herein may be coated with platinum and/or an oxide or oxides of one or more of iridium, ruthenium, tin, rhodium, or tantalum (optionally alloyed with antimony and/or manganese). Cathodes utilized in embodiments disclosed herein may be coated with platinum and/or an oxide or oxides of one or more of iridium, ruthenium, and titanium. Electrodes utilized in embodiments disclosed herein may include a base of one or more of titanium, tantalum, zirconium, niobium, tungsten, and/or silicon. Electrodes for any of the electrochemical cells disclosed herein can be formed as or from plates, sheets, foils, extrusions, and/or sinters.

The term "tube" as used herein includes cylindrical conduits, however, does not exclude conduits having other cross-sectional geometries, for example, conduits having square, rectangular, oval, or obround geometries or cross-sectional geometries shaped as any regular or irregular polygon.

The terms "concentric tubes" or "concentric spirals" as used herein includes tubes or interleaved spirals sharing a common central axis, but does not exclude tubes or interleaved spirals surrounding a common axis that is not necessarily central to each of the concentric tubes or interleaved spirals in a set of concentric tubes or interleaved spirals or tubes or interleaved spirals having axes offset from one another.

Aspects and embodiments disclosed herein are not limited to the number of electrodes, the space between electrodes, the electrode material, material of any spacers between electrodes, number of passes within the electrochlorination cells, or electrode coating material.

This disclosure describes various electrochlorination cells and electrochlorination devices that may be used in combination with UV reactors to perform advanced AOP processes.

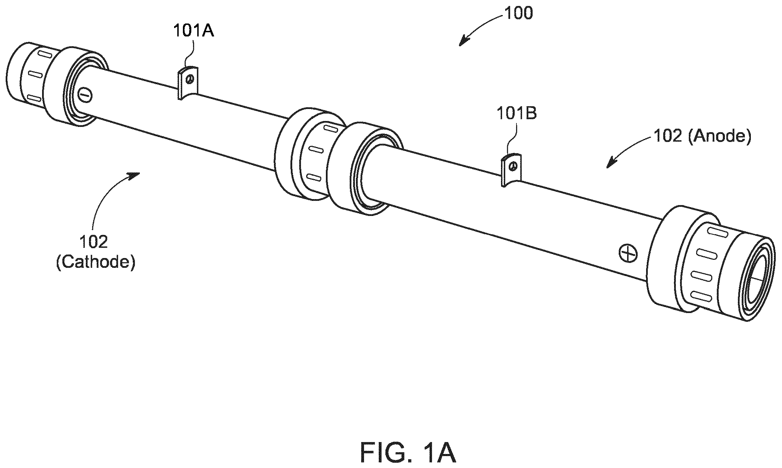

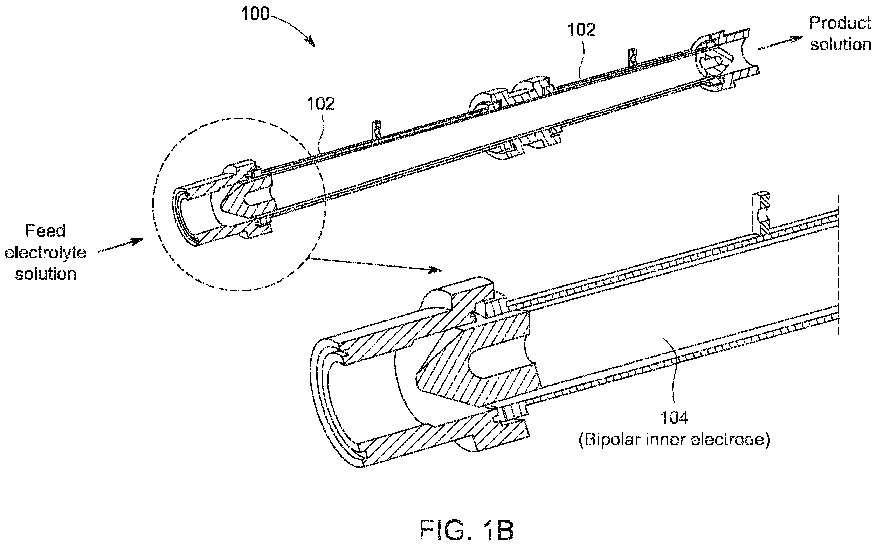

FIGS. 1A and 1B show an example of an electrochlorination cell 100 with concentric tubes 102, 104 manufactured by Electrocatalytic Ltd. The inner surface of the outer tubes 102 and the outer surface of the inner tube 104 are the active electrode areas. The gap between the electrodes is approximately 3.5 mm. For implementations utilizing seawater as feed, the liquid velocity in the gap in the axial direction can be on the order of 2.1 m/s, resulting in highly turbulent flow which reduces the potential for fouling and scaling on the electrode surfaces. The high flow rate and turbulent flow of electrolyte through electrochlorination cells with concentric tubes as disclosed herein results in significant advantages in preventing scale formation due to hardness as compared to other electrochemical cell configurations, for example, electrochemical cells with parallel plate electrodes.

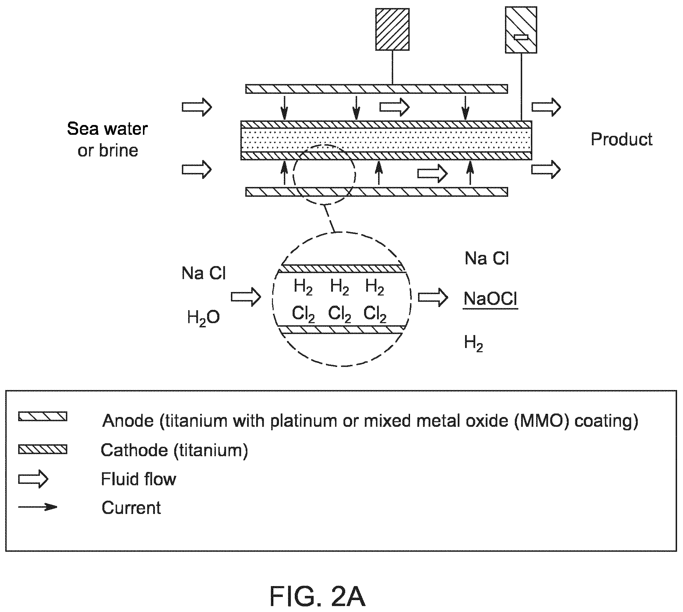

FIGS. 2A-2C show some possible arrangements of electrodes in a concentric tube electrode (CTE) electrochemical cell. FIG. 2A illustrates an arrangement in which current flows in one pass from the anode to the cathode. Both electrodes are typically fabricated from titanium, with the anode coated with platinum or a mixed metal oxide (MMO). The electrodes are called "mono-polar."

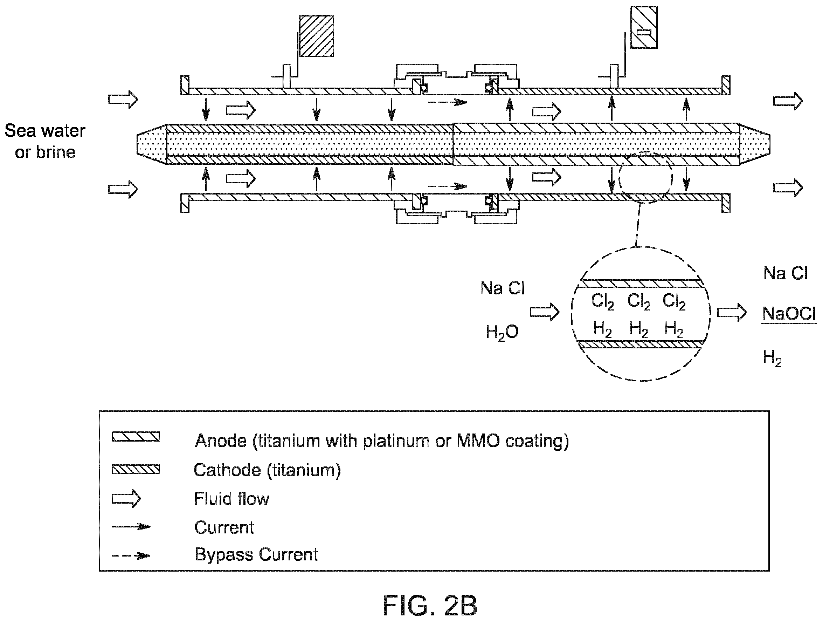

FIG. 2B illustrates an arrangement in which current flows in two passes through the device with two outer electrodes and one inner electrode. One of the outer electrodes is coated on the inside surface to serve as an anode; the other is uncoated. A portion of the outer surface of the inner electrode is coated, also to serve as an anode, and the remaining portion is uncoated. Current flows through the electrolyte from the coated outer electrode to the uncoated portion of the inner electrode, along the inner electrode to the coated portion, then finally back across the electrolyte to the uncoated outer electrode. The inner electrode is also called a "bipolar" electrode.

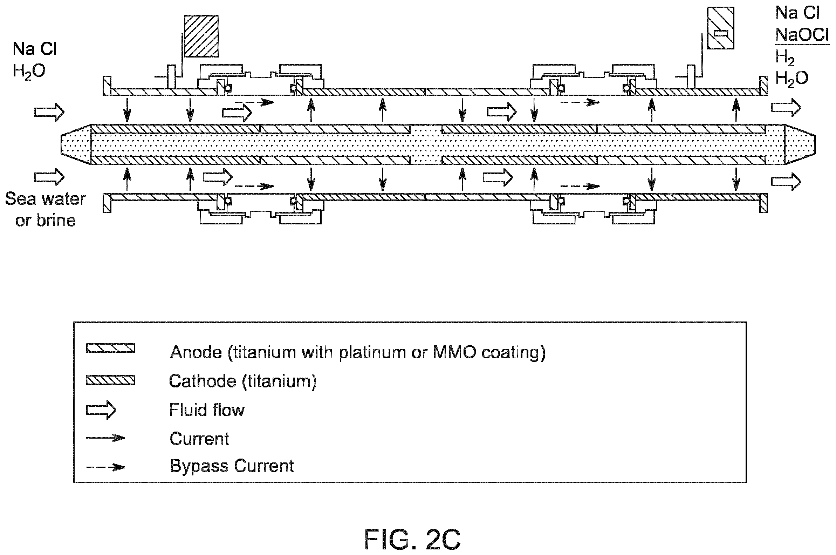

FIG. 2C illustrates an arrangement in which current flows in multiple passes through the device with multiple outer electrodes and one inner electrode. By alternating coated and uncoated outer electrodes and coating the inner electrodes at matching intervals, current can flow back and forth through the electrolyte in multiple passes.

The rationale behind multiple passes is that the overall electrode area available for electrochemical reaction at the surface, and therefore the overall production rate of oxidant (e.g., sodium hypochlorite), can be increased without a proportional increase in applied current. Increasing the electrical current would require larger wires or bus bars from the DC power supply to the electrochlorination cell, larger electrical connectors on the cell (lugs 101A and 101B on the outside surface of the outer electrode in the example in FIG. 1A) and thicker titanium for the electrodes.

For the same current, a multiple pass device will have a higher production rate than a single pass cell but the overall voltage drop will be higher (approximately proportional to the number of passes). For the same production rate, a multiple pass cell will require lower current (approximately inversely proportional to the number of passes). For the same power output (kW), power supply costs may be more sensitive to output current than output voltage, thereby favoring the multi-pass cells.

In actuality there are inefficiencies associated with a multiple pass cell. For example, a portion of the current, referred to as "bypass current," can flow directly from an anode to a cathode without crossing the electrolyte in the gap between the outer and inner electrodes (see FIGS. 2B and 2C). The bypass current consumes power but results in less efficient production of oxidant than non-bypass current. Multiple pass cells are also more complex to fabricate and assemble. Portions of the outer surface of the inner electrode, for example, should be masked before the remaining portions are coated.

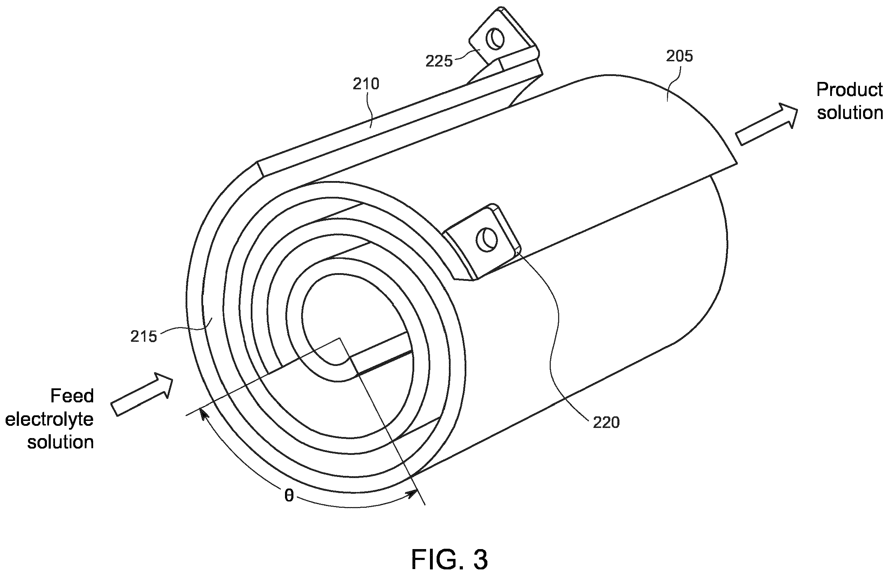

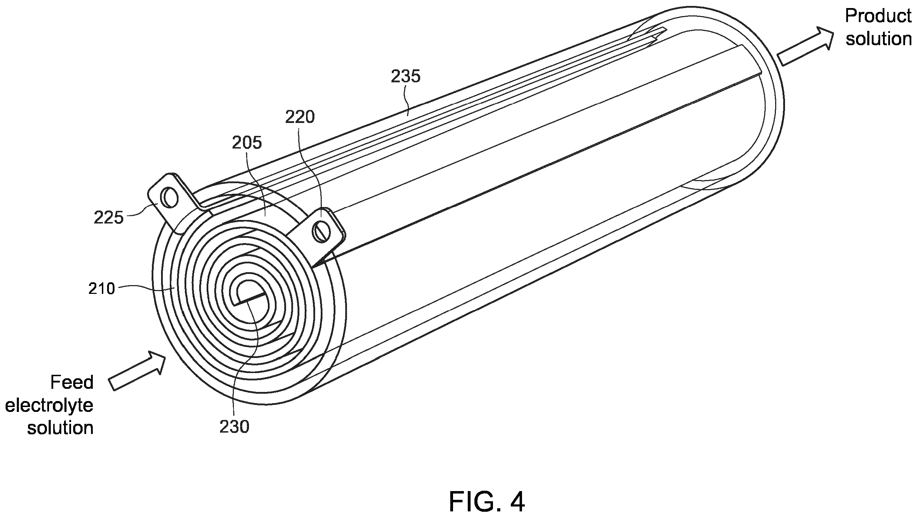

The water treatment system of the invention comprises an electrochemical cell, such as electrochemical cells having spiral wound electrodes, non-limiting example of which are illustrated in FIGS. 3 and 4. In spiral wound configurations, two spiral-wound electrodes, an anode 205 and a cathode 210 forming an anode-cathode pair, are positioned to form a gap 215 in between the anode 205 and cathode 210. The angular difference between the starting ends of the helixes and/or the ending ends of the helixes, labeled θ in FIG. 3, may range from 0° to 180°. A feed electrolyte solution flows through the gap 215 in a direction substantially parallel to the axes of the spirals. A DC voltage, constant or variable, or in some embodiments, AC current, is applied across the electrodes and through the electrolyte solution. An anode tab 220 and a cathode tab 225 are connected to or formed integral with the anode 205 and cathode 210, respectively, to provide electrical connection to the anode 205 and cathode 210. The current flows from the anode 205 to the cathode 210 in a single pass. Electrochemical and chemical reactions occur at the surfaces of the electrodes and in the bulk electrolyte solution in the electrochemical cell to generate a product solution.

The spiral wound electrodes 205, 210 may be housed within a housing 235 (See FIG. 4) designed to electrically isolate the electrodes from the outside environment and to withstand the fluid pressure of electrolyte passing through the electrochemical cell. The housing 235 may be non-conductive, chemically nonreactive to electrolyte solutions, and may have sufficient strength to withstand system pressures. In some embodiments, a solid core, central core element, or fluid flow director that prevents fluid from flowing down the center and bypassing the gap may be provided.

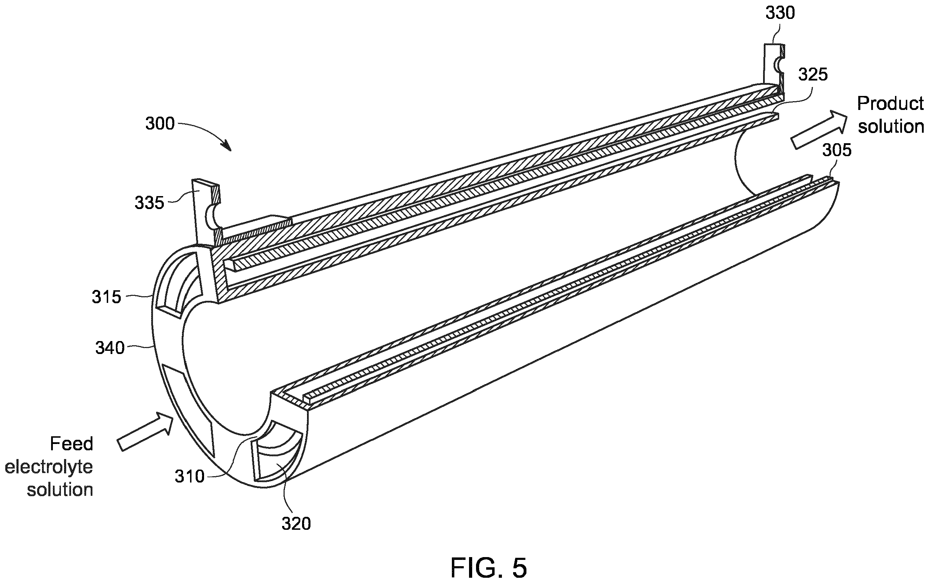

The water treatment system of the invention comprises an electrochemical cell, such as electrochemical cells including concentrically arranged tubular electrodes, non-limiting examples of which are illustrated in FIGS. 5-7. At least some of the concentric tube electrodes may be mono-polar or bi-polar. A first embodiment, including three concentric tubes, is illustrated in FIG. 5 indicated generally at 300. The middle tube electrode 305 is an anode having an oxidation resistant coating, for example, platinum or MMO, on both the inner and outer surface to make full use of the surface area of the middle tube electrode 305. The inner tube electrode 310 and outer tube electrode 315 have no coating, acting as an inner cathode and an outer cathode, respectively. The electrodes are mono-polar such that current passes through the electrolyte once per electrode. Each of the electrodes 305, 310, 315 may include a titanium tube. The anode electrical connection 330 is in electrical communication with the middle tube electrode 305. The cathode electrical connection 335 is in electrical communication with the inner tube electrode 310 and outer tube electrode 315. Electrochlorination cell 300 and other electrochemical cells including concentric tube electrodes disclosed herein may be included in a non-conductive housing, for example, housing 235 illustrated in FIG. 4.

In cells disclosed herein including multiple anode or cathode tube electrodes, the multiple anode tube electrodes may be referred to collectively as the anode or the anode tube, and the multiple cathode tube electrodes may be referred to collectively as the cathode or the cathode tube. In embodiments including multiple anode and/or multiple cathode tube electrodes, the multiple anode tube electrodes and/or multiple cathode tube electrodes may be collectively referred to herein as an anode-cathode pair.

Electrical connection may be made between the inner tube electrode 310 and outer tube electrode 315 by one or more conductive bridges 340, which may be formed of the same material as the inner tube electrode 310 and outer tube electrode 315, for example, titanium. Electrochemical and chemical reactions occur at the surfaces of the electrodes and in the bulk solution to generate a product solution, for example, sodium hypochlorite for disinfection.

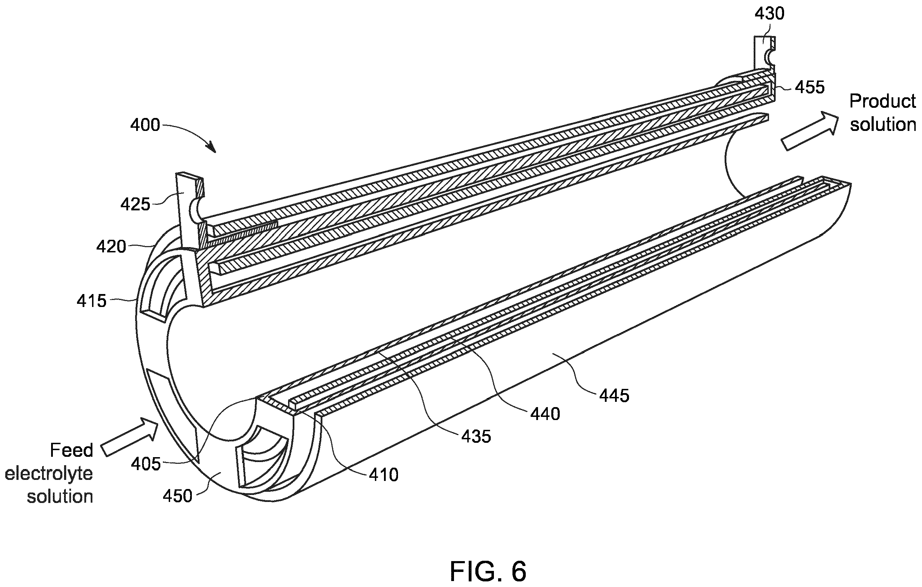

In accordance with another embodiment, a concentric tube electrochemical or electrochlorination cell includes four concentric tube electrodes. An example of a four tube electrochlorination cell is shown in FIG. 6, indicated generally at 400. The four tube electrochlorination cell 400 includes inner tube electrode 405 and intermediate tube electrode 410 that act as anodes and that may be in electrical communication with anode electrical connector 425. Inner tube electrode 405 and intermediate tube electrode 410 may also be in electrical communication with one another via one or more conductive bridges 450. Outer tube electrode 420 and intermediate tube electrode 415 act as cathodes that may be in electrical communication with cathode electrical connector 430. Outer tube electrode 420 and intermediate tube electrode 415 may also be in electrical communication with one another via one or more conductive bridges 455. Outer tube electrode 420 and intermediate tube electrode 415 are disposed on opposite sides of intermediate anode tube electrode 410. The four tube electrochlorination cell 400 works in a similar way to the three tube electrochlorination cell 300, except that a feed electrolyte solution flows through the three annular gaps 435, 440, 445 formed in the four tube electrochlorination cell 400.

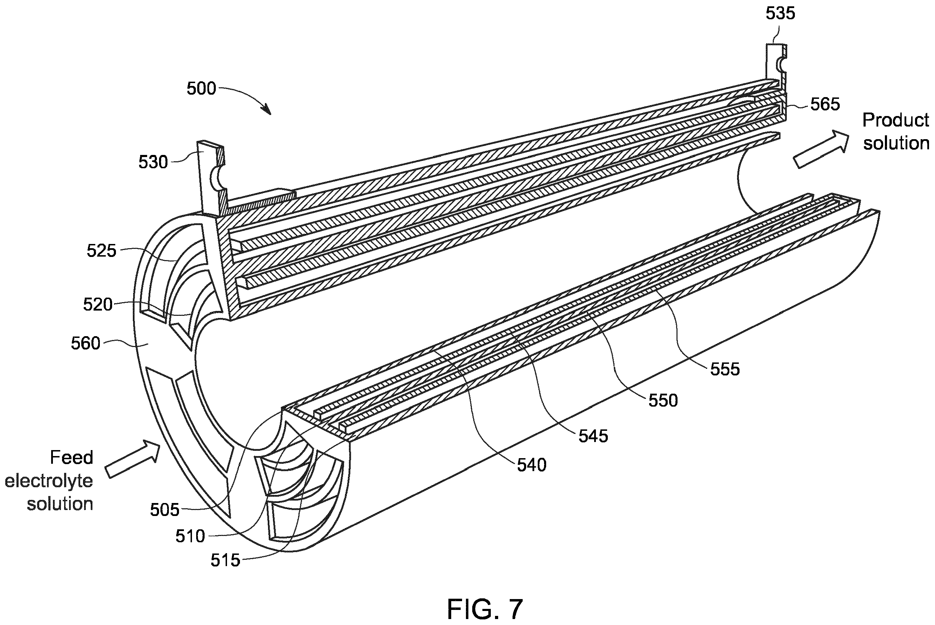

In accordance with another embodiment, a concentric tube electrochlorination cell includes five concentric tube electrodes. An example of a five tube electrochlorination cell is shown in FIG. 7, indicated generally at 500. The five tube electrochlorination cell 500 includes intermediate tube electrodes 520 and 525 that act as anodes and that may be in electrical communication with anode electrical connector 535. Intermediate tube electrodes 520, 525 may also be in electrical communication with one another via one or more conductive bridges 565. Inner tube electrode 505, center tube electrode 510, and outer tube electrode 515 act as cathodes that may be in electrical communication with cathode electrical connector 530. Inner tube electrode 505, center tube electrode 510, and outer tube electrode 515 may also be in electrical communication with one another via one or more conductive bridges 560. Intermediate tube electrodes 520, 525 are disposed on opposite sides of center anode tube electrode 510. The five tube electrochlorination cell works in a similar way to the four tube electrochlorination cell 400, except a feed electrolyte solution flows through the four annular gaps 540, 545, 550, 555 formed in the five tube electrochlorination cell.

Electrochemical cells including spiral wound, concentric, radially arranged, and interleaved electrodes are described in further detail in commonly owned PCT publication No. WO2016/133985A1.

The water treatment system of the invention comprises an actinic radiation reactor, for example, a UV reactor, that receives one or more oxidants generated in an electrochlorination cell as disclosed herein to facilitate destruction, e.g., oxidation, of one or more contaminants in water undergoing treatment in the actinic radiation reactor. The actinic radiation reactor can comprise a vessel, and a first array of tubes in the vessel. The first array of tubes can comprise a first set of parallel tubes, and a second set of parallel tubes. Each tube can comprise at least one ultraviolet lamp and each of the parallel tubes of the first set is positioned to have its longitudinal axis orthogonal relative to the longitudinal axis of the tubes of the second set.

In examples of an actinic radiation reactor utilized in systems disclosed herein, organic compounds in water undergoing treatment can be oxidized by one or more free radical species into carbon dioxide, which can be removed in one or more downstream unit operations. The actinic radiation reactor can comprise at least one free radical activation device that converts one or more precursor compounds, for example, one or more oxidants provided by an electrochlorination device, into one or more free radical scavenging species, for example, the hydroxyl radical $OH^-$. The actinic radiation reactor can comprise one or more lamps, in one or more reaction chambers, to irradiate or otherwise provide actinic radiation to the water and divide the precursor compound into the one or more free radical species.

The reactor can be divided into two chambers by one or more baffles between the chambers. The baffle can be used to provide mixing or turbulence to the reactor or prevent mixing or promote laminar, parallel flow paths through the interior of the reactor, such as in the chambers. In certain embodiments, a reactor inlet is in fluid communication with a first chamber and a reactor outlet is in fluid communication with a second chamber.

In some embodiments, at least three reactor chambers, each having at least one ultraviolet (UV) lamp disposed to irradiate the water in the respective chambers with light of about 185 nm, 220 nm, and/or 254 nm, or ranging from about 185 nm to about 254 nm, at various power levels, are serially arranged in reactor 120. It is to be appreciated that the shorter wavelengths of 185 nm or 220 nm may be preferable in AOP processes because UV light at these wavelengths has sufficient photon energy to create free radicals from free radical precursors utilized in the process for oxidizing dissolved organic contaminants. In contrast, disinfection processes, where UV light may be utilized to kill or disable microorganisms, may operate efficiently with UV light at the 254 nm wavelength produced by low pressure lamps. Disinfection systems would not typically utilize the more expensive medium pressure or high pressure UV lamps capable of providing significant UV intensity at the shorter 185 nm or 220 nm wavelengths.

The one or more lamps can be positioned within the one or more actinic radiation reactors by being placed within one or more sleeves or tubes within the reactor. The tubes can hold the lamps in place and protect the lamps from the water within the reactor. The tubes can be made of any material that is not substantially degraded by the actinic radiation and the water or components of the water within the reactor, while allowing the radiation to pass through the material. The tubes can have a cross-sectional area that is circular. In certain embodiments, the tubes can be cylindrical, and the material of construction thereof can be quartz. Each of the tubes can be the same or different shape or size as one or more other tubes. The tubes can be arranged within the reactor in various configurations, for example, the sleeves may extend across a portion of or the entire length or width of the reactor. The tubes can also extend across an inner volume of the reactor.

Commercially available ultraviolet lamps and/or quartz sleeves may be obtained from Hanovia Specialty Lighting, Fairfield, New Jersey, Engineered Treatment Systems, LLC (ETS), Beaver Dam, Wisconsin, and Heraeus Noblelight GmbH of Hanau, Germany. The quartz material selected can be based at least in part on the particular wavelength or wavelengths that will be used in the process. The quartz material may be selected to minimize the energy requirements of the ultraviolet lamps at one or more wavelengths. The composition of the quartz can be selected to provide a desired or suitable trasmittance of ultraviolet light to the water in the reactor and/or to maintain a desired or adequate level of transmissivity of ultraviolet light to the water. In certain embodiments, the transmissivity can be at least about 50% for a predetermined period of time. For example, the transmissivity can be about 80% or greater for a predetermined period of time. In certain embodiments, the transmissivity can be in a range of about 80% to 90% for about 6 months to about one year. In certain embodiments, the transmissivity can be in a range of about 80% to 90% for up to about two years.

The tubes can be sealed at each end so as to not allow the contents of the reactor from entering the sleeves or tubes. The tubes can be secured within the reactor so that they remain in place throughout the use of the reactor. In certain embodiments, the tubes are secured to the wall of the reactor. The tubes can be secured to the wall through use of a suitable mechanical technique, or other conventional techniques for securing objects to one another. The materials used in the securing of the tubes is preferably inert and will not interfere with the operation of the reactor or negatively impact the purity of the water, or release contaminants into the water.

The lamps can be arranged within the reactor such that they are parallel to each other. The lamps can also be arranged within the reactor at various angles to one another. For example, in certain embodiments, the lamps can be arranged to illuminate paths or coverage regions that form an angle of approximately 90 degrees such that they are approximately orthogonal or perpendicular to one another. The lamps can be arranged in this fashion, such that they form an approximately 90 degree angle on a vertical axis or a horizontal axis, or any axis therebetween.

In certain embodiments, the reactor can comprise an array of tubes in the reactor or vessel comprising a first set of parallel tubes and a second set of parallel tubes. Each tube may comprise at least one ultraviolet lamp and each of the parallel tubes of the first set can be arranged to be at a desired angle relative to the second set of parallel tubes. The angle may be approximately 90 degrees in certain embodiments. The tubes of any one or both of the first array and the second array may extend across an inner volume of the reactor. The tubes of the first set and the second set can be arranged at approximately the same elevation within the reactor.

Further configurations can involve tubes and/or lamps that are disposed to provide a uniform level of intensity at respective occupied or coverage regions in the reactor. Further configurations can involve equispacially arranged tubes with one or more lamps therein.

The reactor may contain one or more arrays of tubes arranged within the reactor or vessel. A second array of tubes can comprise a third set of parallel tubes, and a fourth set of parallel tubes orthogonal to the third set of parallel tubes, each tube comprising at least one ultraviolet lamp. The fourth set of parallel tubes can also be orthogonal to at least one of the second set of parallel tubes and the first set of parallel tubes.

In certain embodiments, each array within the reactor or vessel can be positioned a predetermined distance or elevation from another array within the reactor. The predetermined distance between a set of two arrays can be the same or different.

The reactor can be sized based on the number of ultraviolet lamps required to scavenge, degrade, or otherwise convert at least one of the impurities, typically the organic carbon-based impurities into an inert, ionized, or otherwise removable compound, one or more compounds that may be removed from the water, or at least to one that can be more readily removed relative to the at least one impurity. The number of lamps required can be based at least in part on lamp performance characteristics including the lamp intensity and spectrum wavelengths of the ultraviolet light emitted by the lamps. The number of lamps required can be based at least in part on at least one of the expected TOC concentration or amount in the inlet water stream and the amount of oxidant added to the feed stream or reactor.

Sets of serially arranged reactors can be arranged in parallel. For example, a first set of reactors in series may be placed in parallel with a second set of reactors in series, with each set having three reactors, for a total of six reactors. Any one or more of the reactors in each set may be in service at any time. In certain embodiments, all reactors may be in service, while in other embodiments, only one set of reactors is in service.

Commercially available sources of actinic radiation systems as components of free radical scavenging systems include those from, for example, Quantrol, Naperville, Illinois, as the AQUAFINE® UV system, and from Aquionics Incorporated, Erlanger, Kentucky.

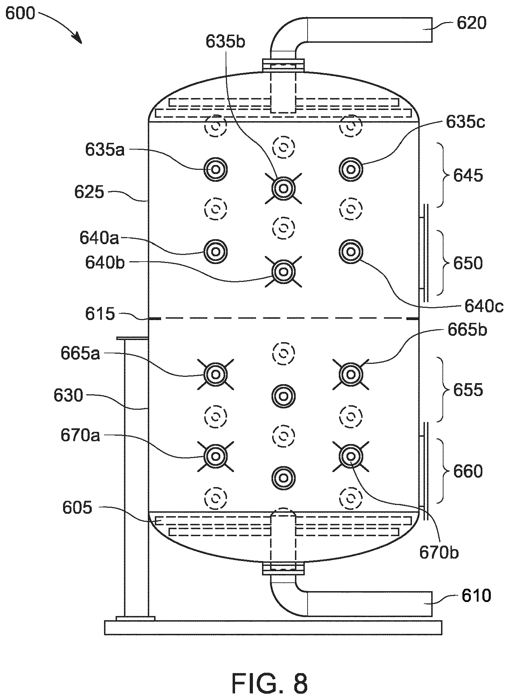

One non-limiting example of an actinic radiation reactor vessel that may be utilized in aspects and embodiments disclosed herein is illustrated in FIG. 8, generally at 600. Reactor vessel 600 typically comprises inlet 610, outlet 620, and baffle 615 which divides reactor vessel 600 into upper chamber 625 and lower chamber 630. Reactor vessel 600 can also comprise manifold 605 which can be configured to distribute water introduced through inlet 610 throughout the vessel. In certain embodiments, manifold 605 can be configured to evenly distribute water throughout the vessel. For example, manifold 605 can be configured to evenly distribute water throughout the vessel such that the reactor operates as a plug flow reactor.

In some examples, the reactor vessel may comprise more than one baffle 615 to divide the reactor vessel into more than two chambers. Baffle 615 can be used to provide mixing or turbulence to the reactor. In certain examples, as shown in FIG. 8, reactor inlet 610 is in fluid communication with lower chamber 630 and reactor outlet 620 is in fluid communication with upper chamber 625.

In some embodiments, at least three reactor chambers, each having at least one ultraviolet (UV) lamp disposed to irradiate the water in the respective chambers with light of about or ranging from about 185 nm to about 254 nm, 220 nm, and/or 254 nm at a desired or at various power levels, are serially arranged in reactor 120.

The reactor vessel can also comprise a plurality of ultraviolet lamps positioned within tubes, for example, tubes 635a-c and 640a-c. In one example, as shown in FIG. 8, reactor vessel 600 comprises a first set of parallel tubes, tubes 635a-c and a second set of parallel tubes (not shown). Each set of parallel tubes of the first set is approximately orthogonal to the second set to form first array 645. Tubes 635a-c and the second set of parallel tubes are at approximately the same elevation in reactor vessel 600, relative to one another.

Further, the reactor vessel can comprise a third set of parallel tubes and a fourth set of parallel tubes. Each set of parallel tubes of the first set is approximately orthogonal to the second set to form, for example, second array 650. As exemplarily illustrated, tubes 640a-c and the second set of parallel tubes are at approximately the same elevation in reactor vessel 600, relative to one another. As shown in FIG. 8, first array 645 can be positioned at a predetermined distance from second array 650. Vessel 600 can additionally comprise third array 655 and fourth array 660, each optionally having similar configurations as first array 640 and second array 645.

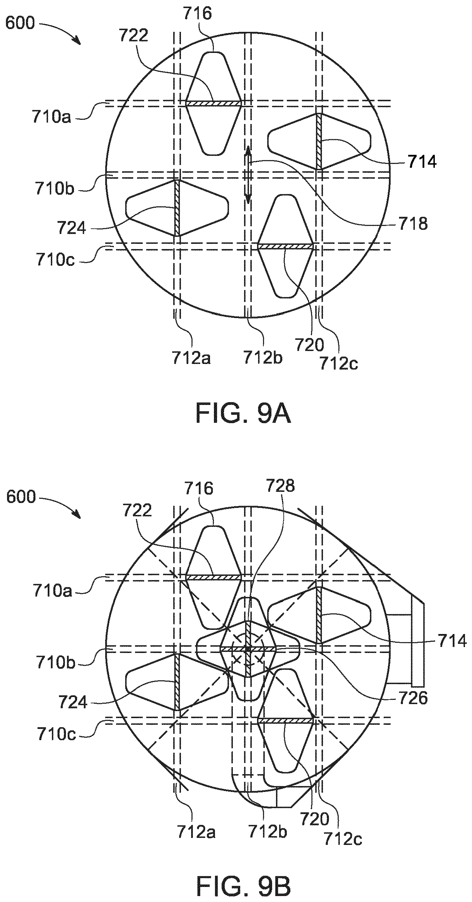

In another example a first tube 635b can be arranged orthogonal to a second tube 640b to form a first array. Additionally, a set of tubes, tube 665a and tube 665b can be arranged orthogonal to another set of tubes, tube 670a and tube 670b to form a second array. The position of the lamps of the second array are shown in FIG. 9A, including lamps 714, 720, 722, and 724. The positions of the lamps in the first array and the second array are shown in FIG. 9B, including lamps 726 and 728 of the first array and lamps 714, 720, 722, and 724 of the second array.

The lamps can generate a pattern, depending on various properties of the lamp, including the dimensions, intensity, and power delivered to the lamp. The light pattern generated by the lamp is the general volume of space to which that the lamp emits light. In certain embodiments the light pattern or illumination volume is defined as the area or volume of space that the lamp can irradiate or otherwise provide actinic radiation to and allow for division or conversion of the precursor compound into the one or more free radical species.

As shown in FIGS. 9A and 9B, which shows exemplarily cross-sectional views of reactor 600 in which a first set of tubes 710a-c are arranged parallel to one another, and a second set of tubes 712a-c are arranged parallel to one another. As shown, first set of tubes 710a-c is arranged orthogonal relative to second set of tubes 712a-c. Lamps, such as lamps 714, are dispersed within tubes 710a-c and 712a-c, and when illuminated, can generate light pattern 716.

One or more ultraviolet lamps, or a set of lamps, can be characterized as projecting actinic radiation parallel to an illumination vector. The illumination vector can be defined as a direction in which one or more lamps emits actinic radiation. In an exemplarily embodiment, as shown in FIG. 9A, a first set of lamps, including lamp 720 and 722, is disposed to project actinic radiation parallel to illumination vector 718.

A first set of ultraviolet lamps each of which is disposed to project actinic radiation parallel to a first illumination vector can be energized. A second set of ultraviolet lamps each of which is disposed to project actinic radiation parallel to a second illumination vector can also be energized. At least one of the direction of the illumination and the intensity of at least one of the first set of ultraviolet lamps and second set of ultraviolet lamps can be adjusted. Each set of ultraviolet lamps can comprise one or more ultraviolet lamps.

The number of lamps utilized or energized and the configuration of the lamps in use can be selected based on the particular operating conditions or requirements of the system. For example, the number of lamps utilized for a particular process can be selected and controlled based on characteristics or measured or calculated parameters of the system. For example, measured parameters of the inlet water or treated water can include any one or more of TOC concentration, temperature, or flow rate. The number of energized lamps can also be selected and controlled based on the concentration or amount of oxidant, e.g., NaOCl added to the system. For example, 12 lamps in a particular configuration can be used if the flow rate of the water to be treated is at or below a certain threshold value, for example, a nominal or design flow rate, such as 4914 liters per minute (1300 gpm), while more lamps can be used if the flow rate of the water to be treated rises above the threshold value. For example, if the flow rate increases from 4914 liters per minute (1300 gpm )to a selected higher threshold value, additional lamps can be energized. For example, 24 lamps may be used if the flow rate of the water to be treated reaches 7182 liters per minute (1900 gpm). Thus, the flow rate of the water can be partially determinative of which lamps and/or the number of energized lamps in each reactor.

In certain embodiments, the ultraviolet lamps can be operated at one or more illumination intensity levels. For example, one or more lamps can be used that can be adjusted to operate at a plurality of illumination modes, such as at any of dim, rated, and boost mode, for example, a low, medium, or high mode. The illumination intensity of one or more lamps can be adjusted and controlled based on characteristics or measured or calculated parameters of the system, such as measured parameters of the inlet water or treated water, including TOC concentration, temperature, and/or flow rate. The illumination intensity of one or more lamps can also be adjusted and controlled based on the concentration or amount of persulfate added to the system. For example, the one or more lamps can be used in a dim mode up to a predetermined threshold value of a measured parameter of the system, such as a first TOC concentration. The one or more lamps can be adjusted to rated mode if the measured or calculated TOC concentration reaches or is above a second TOC concentration, which may be above the threshold value. The one or more lamps can further be adjusted to a boost mode if the measured or calculated TOC concentration reaches or is above a second threshold value.

Actinic radiation reactors that may be utilized in systems disclosed herein are described in further detail in commonly owned PCT publication No. WO2016/133985A1.

Methods disclosed herein provide a method for a water treatment comprising the following steps: (a) adding a chlorine species to water to be treated to be dissolved (free chlorine species) in the water to be treated, (b) measuring a demand of the chlorine species dissolved in the water to be treated (chlorine species demand) while the chlorine species dissolved in the water to be treated partly reacts with organic water constituents within the water to be treated, and (c) applying an AOP to the water to be treated while controlling the AOP by using the measured demand of the chlorine species dissolved in the water to be treated.

Optionally, the chlorine species is chlorine or chlorine dioxide which will be dissolved in the water to be treated as the free chlorine species.

Optionally, while controlling the AOP formation of the hydroxyl radicals is regulated, for example, by adjusting the addition of the chlorine species and/or by adjusting an addition of an alternative oxidant.

Optionally, the AOP is a traditional, chemical AOP, an ultraviolet driven AOP, a chlorine species AOP, or an ultraviolet driven chlorine species AOP (UV/chlorine species AOP).

Optionally, the AOP is an UV/chlorine species AOP. Controlling the UV/chlorine species AOP formation of the hydroxyl radicals is regulated by regulating an UV energy irradiating the water to be treated and/or by regulating the adding of the chlorine species.

Optionally, the AOP is an UV AOP. Controlling the UV AOP formation of the hydroxyl radicals is regulated by regulating an intensity of UV energy irradiating the water to be treated and/or by regulating the addition of an alternative oxidant in a main flow of the water to be treated, while adding the chlorine species and/or measuring the demand of the chlorine species in a by-pass flow of the water to be treated.

On-site reaction product generation poses major advantages over bulk chemical dosing, both in terms of cost and overall process complexity, for UV AOP applications. Two major accelerants generally used for UV AOP include hydrogen peroxide and bulk hypochlorite.

For on-site hypochlorite generation from brine-based solutions different considerations should be taken into account such as the presence of divalent ions. The ionic concentrations and salinity of various natural sources of chlorine-containing water from different locations are tabulated in tables 1 and 2 below.

Table 1 - concentrations

| Major ionic composition of seawater (mg/L) | | | | |
|---|---|---|---|---|
| | Typical Seawater | Eastern Mediterranean | Arabian gulf at Kuwait | Red sea at Jeddah |
| Chloride (Cl$^-$ | 18,980 | 21,200 | 23,000 | 22,219 |
| Sodium (Na+) | 10,556 | 11,800 | 15,850 | 12,225 |
| Sulfate (SO$_4{}^{2-}$) | 2,649 | 2,950 | 3,200 | 3,078 |
| Magnesium (Mg$^{2+}$) | 1,262 | 1,403 | 1,765 | 742 |
| Calcium (Ca$^{2+}$) | 400 | 423 | 500 | 225 |
| Potassium (K$^+$) | 380 | 463 | 460 | 210 |
| Bicarbonate (HCO$_3$-) | 140 | - | 142 | 146 |
| Strontium (Sr$^{2+}$) | 13 | - | - | - |
| Bromide (Br) | 65 | 155 | 80 | 72 |
| Borate (BO$_3{}^{3-}$) | 26 | 72 | - | - |
| Fluoride (F$^-$) | 1 | - | - | - |
| Silicate (SiO$_3{}^{2-}$) | 1 | - | 1.5 | - |
| Iodide (I$^-$) | <1 | 2 | - | - |
| Others | - | - | - | - |
| Total dissolved Solids (TDS) | 34,483 | 38,600 | 45,000 | 41,000 |

Table 2 - salinities

| alinty, g/kg(o/oo) | Name | Type | Region or Countries |
|---|---|---|---|
| 474 | Don Juan Pond | Salt Lake | Antarctica |
| 433 | Gaet'ale Pond | Salt Lake | Ethiopia |
| 400 | Lake Retba | Salt Lake | Senegal |
| 350 | Lake Vanda | Salt Lake | Antarctica |
| 350 | Garabogazkol | Lagoon | Turkmenistan |
| 348 | Lake Assai | Salt Lake | Djibouti |
| 337 | Dead Sea | Salt Lake | Israel, Jordan |
| 317 | Great Salt Lake, North America | Salt Lake | United States |
| 85-280 | Lake Urmia | Salt Lake | Iran |
| 180 | Little manitou lake | Salt Lake | Canada |

(continued)

| alinty, g/kg(o/oo) | Name | Type | Region or Countries |
|---|---|---|---|
| 142 | Great Salt Lake, South America | Salt Lake | United States |
| 88 | Mono Lake | Salt Lake | United States |
| 66 | Hamelin Pool | Lagoon | Australia |
| 44 | Salton Sea | Salt Lake | United States |
| 38 | Mediterranean Sea | Mediterranean Sea | Southern Europe, Levant, North Africa |
| 36-41 | Red Sea | Mediterranean Sea | Middle East |
| 30-40 | Lake Natron | Salt Lake | Tanzania |
| 35 | Pacific Ocean | Ocean | |
| 35 | Atlantic Ocean | Ocean | |
| 28-32 | Beaufort Sea | Marginal Sea | North of Alaska and Canada |
| 0.13-31 .73 | Chilika Lake | Lagoon | India |
| 13-23 | Black Sea | Mediterranean Sea | Eastern Europe, Turkey |
| 23 | Lake Van | | Turkey |
| 12.5 | Caspian Sea | Inland Sea | Central Asia, |
| 11.4 | Sarygamysh Lake | Salt Lake | Turkmenistan, Uzbekistan |
| 10 | Baltic Sea | Mediterranean Sea | Northern Europe |

Divalent hardness and subsequent scaling is a major failure mode in a hypochlorite-generating electrolyzer which can be addressed with at least one of the following improvements:

- Enhancement of monovalent ion concentration in electrolyzer feed streams;
- Regulation of process stream composition for improved electrolyzer performance;
- Optimized flow features for self-cleaning concentric tubular electrochemical cells; or
- CTE system configurations for the generation of higher product strength solutions.

To effectively implement on-site hypochlorite generation for UV AOP processes, therefore, this consideration should be addressed.

UV AOP processes typically utilize an accelerant, which, in some current state of art systems, is bulk hypochlorite. The use of on-site generation poses significant advantages, relative to the current state of art, however, divalent hardness poses significant issues in the on-site generation of hypochlorite. Novel on-site generation system configurations for the UV AOP treatment of water are therefore disclosed herein.

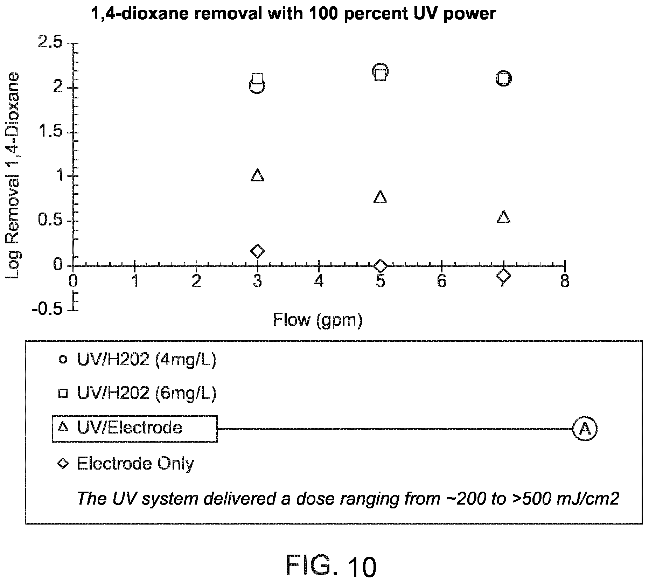

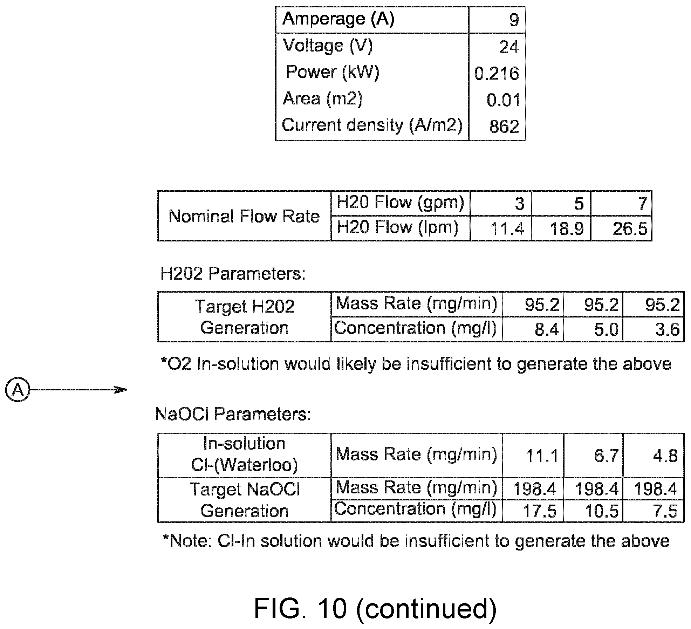

FIG. 10 illustrates results of tests were performed to evaluate destruction of 1,4-dioxane utilizing a UV AOP processes. These tests made use of a parallel plate electrolyzer for accelerant generation, with a reverse osmosis (RO) permeate feed. From the estimated feed composition, insufficient chloride ion was present for full hypochlorite generation. However, based upon the amount of chloride in solution, sufficient hypochlorite was produced to achieve effective 1,4-dioxane removal.

As discussed above, aspects and embodiments disclosed herein may utilize CTE electrochemical cells to generate oxidants that function as accelerants in a UV AOP process. By implementing CTE cells in varying configurations it is possible to facilitate the effective on-site generation of hypochlorite, while mitigating concerns about scale formation, in the context of UV AOP processes.

An example of an inline system outside of the scope of the invention to generate sodium hypochlorite via CTE cell for UV AOP processes is illustrated in FIG. 11. As illustrated an electrolyte, for example, water to be treated 805 is obtained from a source of feed 810 and treated in an CTE electrochemical cell 815 which converts NaCl present in the electrolyte into NaOCl and outputs a chlorinated effluent 820. The chlorinated effluent 820 is directed through a conduit from an outlet of the CTE electrochemical cell 815 into an inlet of an UV AOP reactor 825. Contaminants in the chlorinated effluent 820 are oxidized and destroyed by exposure to UV radiation in the UV AOP reactor 825. The UV AOP reactor 825 outputs a purified effluent or product water 830 which is directed to a point of use 835. The effluent 830 may meet or exceed a desired purity. As the term is used herein, purity of the effluent or product water exiting the actinic radiation reactor refers to a concentration of one or more contaminants in the effluent or product water. In some embodiments, the point of use 835 may be the source of feed 810, for example, when the system is used to treat water from a swimming pool, boiler, or other source of water and returns the treated water to the same source. The point of use 835 may include a shipboard system, a drilling platform system, an aquatics system (for example, a swimming pool or a fountain), a drinking water system, or a downhole of an oil drilling system. The point of use 835 may include a cooling water system of a ship or sea-based platform or a ballast tank of a ship.

FIG. 12 depicts a system similar to that of FIG. 11, with the inclusion of an additional stage for salt addition. A source 905 of salt, for example, solid NaCl, liquid brine, or seawater may deliver NaCl to the electrolyte/water to be treated 805 prior to introduction into the CTE electrochemical cell 815. The source of salt 905 may alternatively be a source of chloride ions and may supply any of sodium chloride, potassium chloride, calcium chloride, or combinations thereof to the electrolyte/water to be treated 805. The source of salt or chloride 905 may alternatively deliver the salt or chloride directly into the source of feed 810. By increasing the concentration of salt in solution, it is possible to both reduce the energy required by the CTE cell 815 and increase the output of hypochlorite for delivery to the downstream UV AOP reactor 825.

One or more sensors 910 may measure one or more parameters, for example, chlorine concentration, temperature, flow rate, contaminant concentration, pH, oxidation-reduction potential (ORP), total organic carbon (TOC), dissolved oxygen and/or hydrogen concentration, purity, etc. of any of the electrolyte/water to be treated 805, chlorinated effluent 820, and/or purified effluent 830. A controller of the system, described further below, may receive readings from the one or more sensors 910 and adjust one or more operating parameters of the system to obtain a desired level of a parameter or parameters read by the one or more sensors 910. The operating parameters of the system may include, for example, power (current or voltage or both) applied to the CTE electrochemical cell 815, intensity of UV light produced in the UV AOP reactor, dosage of UV radiation applied to water to be treated in the UV AOP reactor, flow rate of the electrolyte/water to be treated 805 using a valve 915, rate or amount of addition of the salt to the electrolyte/water to be treated 805 using another valve 920, or any other operating parameter of the system. Such sensors and controller(s) may also be present in the system of FIG. 11 and that of FIG. 13 described below.

FIG. 13 depicts a feed and bleed system according to the invention for the generation of hypochlorite. The electrochemical cell in this system could be of the CTE or parallel plate electrode (PPE) type. A brine solution 1005, or other solution including NaCl or chloride, is fed to the electrochemical cell 815 from the source of salt 905. In some embodiments, additional salt, for example, a chloride salt such as NaCl, is added to the brine solution 1005 to increase the salt concentration in the source of salt 905 to a desired level. The treated brine solution 1010 is recirculated through recirculation loop 1015 from the outlet of the electrochemical cell 815 back to the inlet of the electrochemical cell 815 by pump 1020 with valve 1025 open and valve 1030 shut. By recirculating the treated brine solution 1010, the overall concentration of hypochlorite can be enhanced relative to the concentration of salt in solution, and one may achieve a higher concentration of NaOCl in the treated brine solution 1010 that might be produced from a single pass of the brine 1005 through the electrochemical cell 815. When the concentration of NaOCl in the treated recirculating brine solution 1010, for example, as measured by one of the sensors 910, reaches a desired level, valve 1025 may be shut and valve 1030 opened to release a high concentration NaOCl solution 1035 for mixing with the electrolyte/water to be treated 805 and form the chlorinated effluent 820.

In an alternative embodiment, the source of salt 905 may be a source of seawater and it may be unnecessary to add further salt to the source of salt to achieve the desired concentration of salt in the source of salt.

Various additional pumps or valves may be included in any of the systems described above to control flow of the various aqueous solutions involved, but are not illustrated for the purpose of clarity.

In one or more embodiments, any of which may be relevant to one or more aspects, the systems disclosed herein may utilize one or more subsystems that adjusts or regulates or at least facilitates adjusting or regulating at least one operating parameter, state, or condition of at least one unit operation or component of the system or one or more characteristics or physical properties of a process stream. To facilitate such adjustment and regulatory features, one or more embodiments may utilize controllers and indicative apparatus that provide a status, state, or condition of one or more components or processes. For example, at least one sensor may be utilized to provide a representation of an intensive property or an extensive property of, for example, water from the source of feed 810 or water entering or leaving the electrochemical cell or UV AOP reactor vessel or one or more other downstream processes. Thus, in accordance with a particularly advantageous embodiment, the systems may involve one or more sensors or other indicative apparatus, such as composition analyzers, or conductivity cells, that provide, for example, a representation of a state, condition, characteristic, or quality of the water entering or leaving any of the unit operations of the system.

Various operating parameters of the electrochlorination systems disclosed herein may be controlled or adjusted by an associated control system or controller based on various parameters measured by various sensors located in different portions of the systems. The controller may be programmed or configured to regulate introduction of a chloride containing compound, for example, NaCl or brine, into water to be treated to be introduced to an electrochemical cell upstream of an AOP reactor based at least on one or more of a flow rate of the water to be treated, a concentration of chloride in the water to be treated, or a level of one or more contaminants in the water to be treated. The controller may be programmed or configured to regulate introduction of the chloride containing compound into the water to be treated based at least on a concentration of a chlorine-based compound in a chloride-containing aqueous solution generated in the electrochemical cell. The controller may be further configured to regulate the concentration of the chlorine-based compound generated in the electrochemical cell based at least on a concentration of one or more contaminants in the water to be treated. The controller may be programmed or configured to regulate introduction of the chloride containing compound into the water to be treated based at least on one or more of temperature in the electrochemical cell or pH of the chloride-containing aqueous solution generated in the electrochemical cell.

The controller may be programmed or configured to regulate one or more of a current across the anode-cathode pair or a voltage applied across the anode-cathode pair of the electrochemical cell based on a flow rate of the water to be treated and/or a rate of introduction of the chloride containing compound into the water to be treated. The controller may be programmed or configured to regulate one or more operating parameters of the AOP reactor based on any one or more of flow rate or contaminant concentration of chlorinated effluent entering the AOP reactor, temperature or pH of the chlorinated effluent entering the AOP reactor, or chloride concentration of the chlorinated effluent entering the AOP reactor.

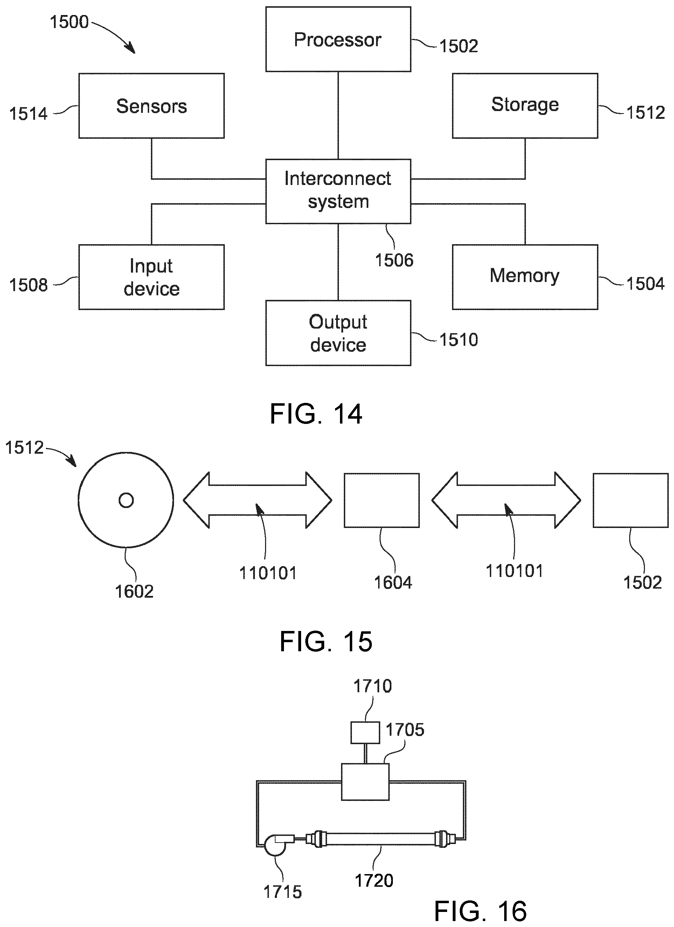

The controller used for monitoring and controlling operation of the various elements of systems disclosed herein may include a computerized control system. Various aspects of the controller may be implemented as specialized software executing in a general-purpose computer system 1500 such as that shown in FIG. 14. The computer system 1500 may include a processor 1502 connected to one or more memory devices 1504, such as a disk drive, solid state memory, or other device for storing data. Memory 1504 is typically used for storing programs and data during operation of the computer system 1500. Components of computer system 1500 may be coupled by an interconnection mechanism 1506, which may include one or more busses (e.g., between components that are integrated within a same machine) and/or a network (e.g., between components that reside on separate discrete machines). The interconnection mechanism 1506 enables communications (e.g., data, instructions) to be exchanged between system components of system 1500. Computer system 1500 also includes one or more input devices 1508, for example, a keyboard, mouse, trackball, microphone, touch screen, and one or more output devices 1510, for example, a printing device, display screen, and/or speaker.

The output devices 1510 may also comprise valves, pumps, or switches which may be utilized to introduce a chloride containing compound (e.g., NaCl, brine, brackish water, or seawater) from the source 905 into the water to be treated and/or to control the speed of pumps or the state (open or closed) of valves of systems as disclosed herein. One or more sensors 1514 may also provide input to the computer system 1500. These sensors may include, for example, sensors 910 which may be, for example, pressure sensors, chemical concentration sensors, temperature sensors, or sensors for any other parameters of interest to the systems disclosed herein. These sensors may be located in any portion of the system where they would be useful, for example, upstream of point of use 835, electrochlorination cell 815, AOP reactor 825, or in fluid communication with source of feed 810. In addition, computer system 1500 may contain one or more interfaces (not shown) that connect computer system 1500 to a communication network in addition or as an alternative to the interconnection mechanism 1506.

The storage system 1512, shown in greater detail in FIG. 15, typically includes a computer readable and writeable nonvolatile recording medium 1602 in which signals are stored that define a program to be executed by the processor 1502 or information to be processed by the program. The medium may include, for example, a disk or flash memory. Typically, in operation, the processor causes data to be read from the nonvolatile recording medium 1602 into another memory 1604 that allows for faster access to the information by the processor than does the medium 1602. This memory 1604 is typically a volatile, random access memory such as a dynamic random access memory (DRAM) or static memory (SRAM). It may be located in storage system 1512, as shown, or in memory system 1504. The processor 1502 generally manipulates the data within the integrated circuit memory 1604 and then copies the data to the medium 1602 after processing is completed. A variety of mechanisms are known for managing data movement between the medium 1602 and the integrated circuit memory element 1604, and aspects and embodiments disclosed herein are not limited thereto. Aspects and embodiments disclosed herein are not limited to a particular memory system 1504 or storage system 1512.

The computer system may include specially-programmed, special-purpose hardware, for example, an application-specific integrated circuit (ASIC). Aspects and embodiments disclosed herein may be implemented in software, hardware or firmware, or any combination thereof. Further, such methods, acts, systems, system elements and components thereof may be implemented as part of the computer system described above or as an independent component.

Although computer system 1500 is shown by way of example as one type of computer system upon which various aspects and embodiments disclosed herein may be practiced, it should be appreciated that aspects and embodiments disclosed herein are not limited to being implemented on the computer system as shown in FIG. 14. Various aspects and embodiments disclosed herein may be practiced on one or more computers having a different architecture or components than shown in FIG. 14.

Computer system 1500 may be a general-purpose computer system that is programmable using a high-level computer programming language. Computer system 1500 may be also implemented using specially programmed, special purpose hardware. In computer system 1500, processor 1502 is typically a commercially available processor such as the well-known Pentium™ or Core™ class processors available from the Intel Corporation. Many other processors are available, including programmable logic controllers. Such a processor usually executes an operating system which may be, for example, the Windows 7, Windows 8, or Windows 10 operating system available from the Microsoft Corporation, the MAC OS System X available from Apple Computer, the Solaris Operating System available from Sun Microsystems, or UNIX available from various sources. Many other operating systems may be used.

The processor and operating system together define a computer platform for which application programs in high-level programming languages are written. It should be understood that the invention is not limited to a particular computer system platform, processor, operating system, or network. Also, it should be apparent to those skilled in the art that aspects and embodiments disclosed herein are not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects and embodiments disclosed herein may be performed on a client-server system that includes components distributed among one or more server systems that perform various functions according to various aspects and embodiments disclosed herein. These components may be executable, intermediate (e.g., IL) or interpreted (e.g., Java) code which communicate over a communication network (e.g., the Internet) using a communication protocol (e.g., TCP/IP). In some embodiments one or more components of the computer system 1500 may communicate with one or more other components over a wireless network, including, for example, a cellular telephone network.

It should be appreciated that the aspects and embodiments disclosed herein are not limited to executing on any particular system or group of systems. Also, it should be appreciated that the aspects and embodiments disclosed herein are not limited to any particular distributed architecture, network, or communication protocol. Various aspects and embodiments disclosed herein are may be programmed using an object-oriented programming language, such as SmallTalk, Java, C++, Ada, or C# (C-Sharp). Other object-oriented programming languages may also be used. Alternatively, functional, scripting, and/or logical programming languages may be used, for example, ladder logic. Various aspects and embodiments disclosed herein may be implemented in a non-programmed environment (e.g., documents created in HTML, XML or other format that, when viewed in a window of a browser program, render aspects of a graphical-user interface (GUI) or perform other functions). Various aspects and embodiments disclosed herein may be implemented as programmed or non-programmed elements, or any combination thereof.

In some embodiments, an existing UV AOP system may be modified or upgraded to include elements of the electrochlorination systems disclosed herein or to operate in accordance with the systems disclosed herein. A method of retrofitting a UV AOP system cell to increase the rate of destruction of contaminants in the UV AOP system may include installing a electrochlorination cell configured to introduce an oxidizing agent into electrolyte upstream of an inlet of the UV AOP.

Example 1:

Table 3 below contains data illustrating the enhanced generation of hypochlorite for a process of recirculating water treated in an electrochlorination cell in a system as illustrated in FIG. 16 including a product tank 1705 having a hydrogen gas vent 1710, a pump 1715, and a CTE electrochemical cell 1720.

Table 3

| One mole of NaOCl equivalent to one mole of chlorine $Cl_2$, MW = 70.914 g/mole | | | | | |
|---|---|---|---|---|---|
| $Na_2S_2O_3$ conc. M = 0.1 | | | | | |
| Theoretical (ppm) | 8000.00 | 400000 | 2000.00 | 1000.00 | 300.00 |
| Temperature | 20°C | 20°C | 20°C | 20°C | 20°C |
| Flow rate (L/min) | 0.6 | 0.6 | 0.6 | 0.6 | 0.6 |
| Time of operation (hours) | 2.08 | 1.18 | 0.83 | 0.42 | 0.12 |
| Voltage | 11.62 | 11.8 | 9.81 | 9.5 | 9.5 |
| Current (A) | 12.00 | 12.00 | 8.30 | 8.30 | 8.30 |

(continued)

| One mole of NaOCl equivalent to one mole of chlorine Cl$_2$, MW = 70.914 g/mole | | | | | |
|---|---|---|---|---|---|
| Na$_2$S$_2$0$_3$ cone. M = 0.1 | | | | | |
| Feed conductivity, ms | 45.80 | 45.10 | 45.30 | 45.25 | 45.06 |
| Volume (l) | 6.00 | 8.00 | 8.00 | 8.00 | 8.00 |
| Titration #1 (ml) | 8.65 | 4.94 | 3.09 | 7.20 | 4.45 |
| Titration #2 (ml) | 8.69 | 4.96 | 3.02 | 7.20 | 4.43 |
| Volume titrated (ml) | 5 | 5 | 5 | 20 | 20 |
| Cone, det #1 (mg/l) | 6133.715 | 3502.954 | 2191.119 | 1276.380 | 788.870 |
| Conc, det #2 (mg/l) | 6162.079 | 3517.136 | 2141.482 | 1276.380 | 785.320 |
| Cone. Average | 6147.897 | 3510.045 | 2166.301 | 1276.380 | 787.095 |
| Deviation % | -23.2 | -12.2 | 8.3 | 27.6 | 162.4 |
| Absorbance | | | | | |
| 385 nm | 0.233 | 0.161 | 0.122 | 0.099 | 0.088 |
| 390 nm | 0.166 | 0.117 | 0.091 | 0.075 | 0.067 |
| 395 nm | 0.123 | 0.089 | 0.069 | 0.058 | 0.053 |
| pH | 8.79 | 8.79 | 8.76 | 8.67 | 8.74 |

The initial solution introduced into the product tank was a 3.5 wt % solution of Instant Ocean® salt mixture dissolved in water having been purified with reverse osmosis. The optical absorption at three different wavelengths of an untreated 3.5 wt % solution of Instant Ocean® salt mixture is provided in Table 4 below for comparison.

Table 4

| Instant Ocean 3.5% Absorbance | |
|---|---|
| 385 nm | 0.020 |
| 390 nm | 0.019 |
| 395 nm | 0.018 |

A comparison of the composition of the various components of the synthetic seawater Instant Ocean® salt mixture solution as compared to typical seawater is provided in Table 5 below.

Table 5

| Mean concentration of major loss in natural seawater and instant ocean®solution | | |
|---|---|---|
| Ion | Instant ocean® solution (ppm) | Seawater (ppm) |
| Chloride | 19,290 | 19)353 |
| Sodium | 10,780 | 10)781 |
| Magnesium | 1,320 | 1,284 |
| Potassium | 420 | 399 |
| Calcium | 400 | 412 |
| Carbonate/bicarbonate | 200 | 126 |
| Bromide | 56 | 67 |
| Stontium | 8.8 | 7.9 |
| Fluoride | 1 | 1.28 |

(continued)

| Mean concentration of major loss in natural seawater and instant ocean®solution | | |
|---|---|---|
| Ion | Instant ocean® solution (ppm) | Seawater (ppm) |
| Iodide | 0.24 | 0.06 |

The enhanced product generated via this loop can then be diluted into a primary feed stream, for delivery to the downstream UV AOP reactor. The data illustrated in Table 3 shows that the concentration of NaOCl in the recirculated solution (e.g., the "Conc. Average" parameter) increased significantly as the time of operation of the recirculating system increased. Accordingly, in a system configured with recirculation of electrolyte through an electrochemical cell, for example as illustrated in FIG. 13, one could set the recirculation time or residence time of electrolyte in the recirculation loop to achieve a concentration of NaOCl in the chlorinated effluent of the electrochemical cell at a desired level. The desired NaOCl concentration level may be one that is effective to destroy/oxidize a desired amount of a particular contaminant or contaminants in a downstream UV AOP reactor with residence time in the UV AOP reactor and/or UV illumination intensity and/or total UV dosage in the UV AOP reactor set at a desired level. One may also set the power applied to the electrochemical cell to achieve the desired NaOCl concentration level in the electrolyte in the recirculation loop within a desired time.

Example 2:

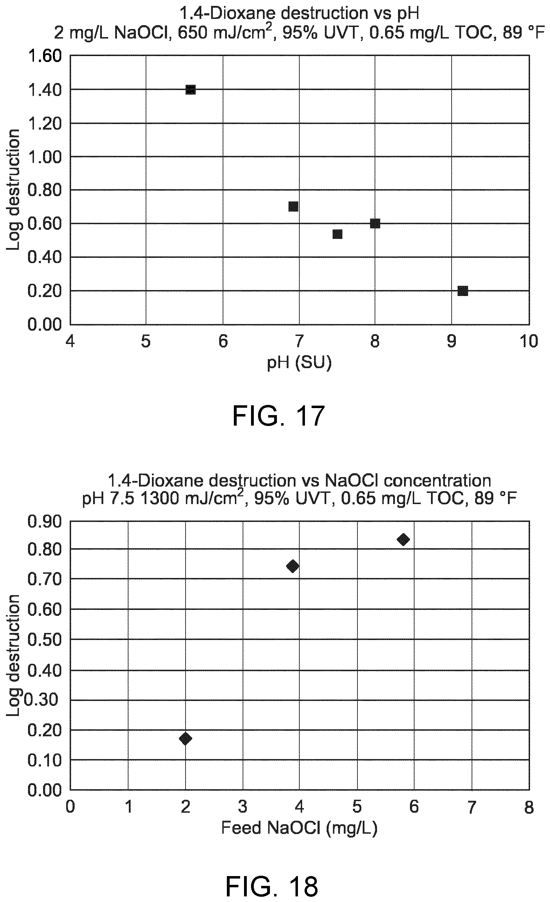

Tests were performed to determine the effect of pH of contaminated water on the destruction of 1, 4 - dioxane in the water in a UV AOP reactor. The contaminated water was treated with 2 mg/L NaOCl. The UV AOP reactor was operated with an ultraviolet light intensity of 650 mJ/cm$^2$ at a temperature of 31.6 deg C (89° F) with an ultraviolet light transmission (UVT) of the contaminated water being 95%. The contaminated water included 0.65 mg/L total organic compounds (TOC). Destruction of 1, 4 - dioxane was measured with the pH of the contaminated water adjusted to about 5.5, about 7, about 7.5, about 8, and about 9.2. The results of this testing are illustrated in FIG. 17. As can be observed from this figure the destruction of 1, 4 - dioxane (the "Log Destruction" values) was greatest at the lowest pH of 5.5 and least at the highest pH of 9.2. Without wishing to be bound to a particular theory, it is believed that at a higher pH, there is a greater competition for hydroxyl radicals between contaminants such as the 1, 4 - dioxane and other compounds that form at higher pH levels, such as hypochlorous acid.

Example 3:

Tests were performed to determine the effect of NaOCl concentration in contaminated water on the destruction of 1, 4 - dioxane in the water in a UV AOP reactor. The UV AOP reactor was operated with an ultraviolet light intensity of 1300 mJ/cm$^2$ at a temperature of 31.6 deg C (89° F) with a UVT of the contaminated water being 95%. The contaminated water included 0.65 mg/L TOC and a pH of 7.5. Testing was performed with the contaminated water was treated with 2 mg/L NaOCl, 3.9 mg/L NaOCl, and 5.82 mg/L NaOCl. The results of this testing are illustrated in FIG. 18. As can be observed from this figure a significant increase in destruction of 1, 4 - dioxane was observed when moving from 2 mg/L NaOCl, 3.9 mg/L NaOCl in the contaminated water and a lesser increase when moving from 3.9 mg/L NaOCl to 5.82 mg/L NaOCl. Without wishing to be bound to a particular theory, it is believed that this data suggests that above a level of between about 4 and about 6 mg/L NaOCl, the destruction of 1, 4 - dioxane in the UV AOP reactor may have been limited by reaction kinetics rather than reactance concentration. Accordingly, above a certain concentration of NaOCl, one may achieved reduced returns when adding additional NaOCl to contaminated water to be treated in a UV AOP system.

Example 4:

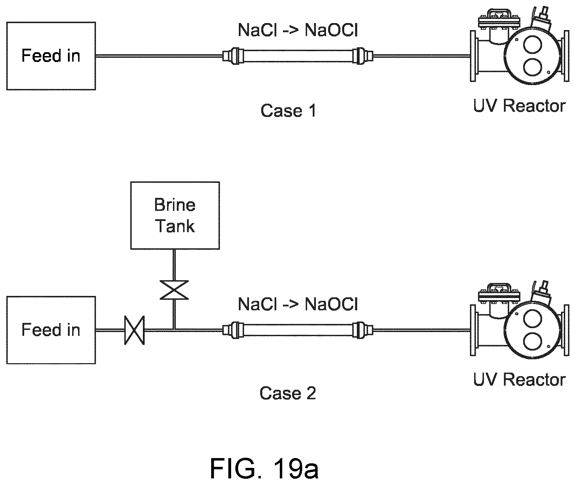

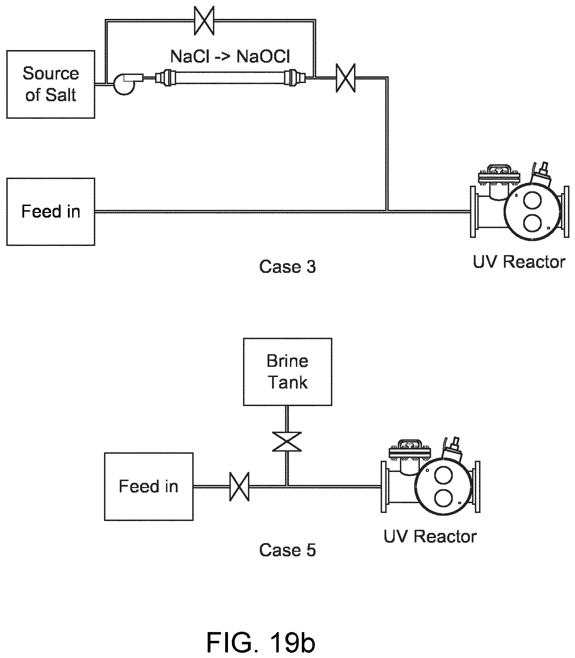

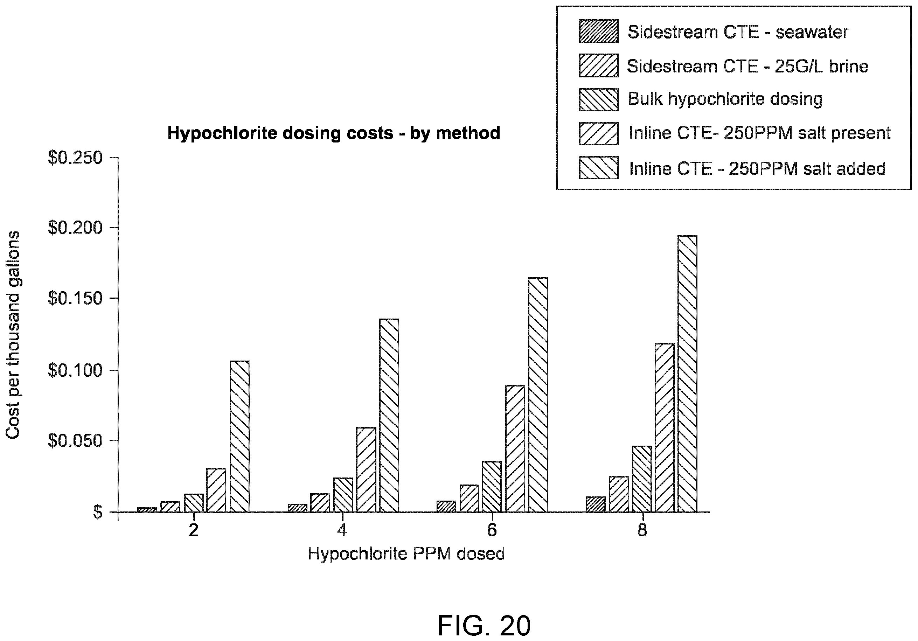

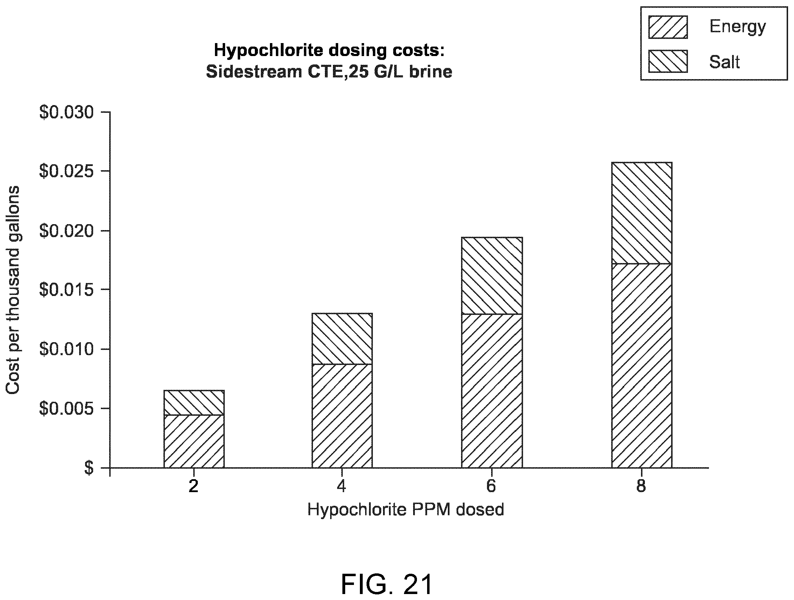

Calculations were performed to determine the relative costs of producing different concentrations of NaOCl in water to be treated utilizing systems including electrochlorination cells and configured as illustrated in FIGS. 11 - 13 (cases 1-3, respectively) as compared to a system in which no electrochlorination cell was used, but NaOCl from a bulk source of NaOCl was added to the water to be treated upstream of the actinic radiation reactor (case 5). Also compared was a case (case 4) similar to that of case 3 (the configuration illustrated in FIG. 13), but where the source of salt 905 was a source of seawater and no additional salt was added to the source of seawater. The different configuration cases are illustrated in FIGS. 19A and 19B. The results of these calculations illustrating the costs associated with generating sodium hypochlorite in different configurations of water treatment systems are illustrated in table 6 below and the plots in FIGS. 20 and 21.

Table 6

| NaOCl PPM | Inline CTE | | | Sidestream CTE - brine | | | Seawater CTE | Base case |
|---|---|---|---|---|---|---|---|---|
| | Energy | Salt | Total | Energy | Salt | Total | Energy | Bulk |
| 2 | $0.030 | $0.076 | $0.11 | $0.004 | $0.002 | $0.007 | $ 0.003 | $0.012 |
| 4 | $0.060 | $0.076 | $0.14 | $0.009 | $0.004 | $0.013 | $0.006 | $0.024 |
| 6 | $0.090 | $0.076 | $0.17 | $0.013 | $0.006 | $0.020 | $0.009 | $0.036 |
| 8 | $0.120 | $0.076 | $0.2 | $0.017 | $0.009 | $0.026 | $0.012 | $0.048 |
| (all costs in $ per 3785 Litres (1000 gallons)) | | | | | | | | |

In FIG. 20 data for case 1 is labelled "INLINE CTE - 250 PPM SALT PRESENT," data for case 2 is labelled "INLINE CTE - 250 PPM SALT ADDED," data for case 3 is labelled "SIDESTREAM CTE - 25G/L BRINE," data for case 4 is labelled "SIDESTREAM CTE - SEAWATER," and data for case 5 is labelled "BULK HYPOCHLORITE DOSING."

Assumptions utilized in preparing these calculations included:

Case 1 Assumptions:

Energy Cost: $0.12 per kwh
NaCl Cost: $0.00 per kg
Stating NaCl concentration: 250 mg/L
Concentration of NaOCl Generated: Varies (2-8 mg/L)
Salt Efficiency: 0.4% (kg NaOCl per kg NaCl)
Power Efficiency: 33.5 kwh/kg NaOCl

Case 2 Assumptions:

Energy Cost: $0.12 per kwh
NaCl Cost: $0.08 per kg
Stating NaCl concentration: 250 mg/L
Concentration of NaOCl Generated: Varies (2-8 mg/L)
Salt Efficiency: 0.4% (kg NaOCl per kg NaCl)
Power Efficiency: 33.5 kwh/kg NaOCl

Case 3 Assumptions:

Energy Cost: $0.12 per kwh
NaCl Cost: $0.08 per kg
Stating NaCl concentration: 25 g/L
Concentration of NaOCl Generated: 0.74%
Salt Efficiency: 29% (kg NaOCl per kg NaCl)
Power Efficiency: 4.99 kwh/kg NaOCl

Case 4 Assumptions:

Energy Cost: $0.12 per kwh
NaCl Cost: $0.00 per kg
Stating NaCl concentration: 35 g/L
Concentration of NaOCl Generated: 0.21%
Salt Efficiency: 9% (kg NaOCl per kg NaCl)
Power Efficiency: 3.36 kwh/kg NaOCl

Case 5 Assumptions

15% NaOCl concentration
NaOCl cost: $0.23 per liter ($0.90 per gallon)

As can be seen from Table 6 and FIGS 20-21, the bulk hypochlorite dosing (case 5) was able to provide sodium hypochlorite more economically than either of the inline CTE configurations (cases 1 and 2). Each of the configurations utilizing recirculation of electrolyte/brine solution from the outlet back to the inlet of the electrochemical cell (cases 3 and 4) were able to provide sodium hypochlorite more economically than bulk hypochlorite dosing, with the configuration using seawater as feed to the electrochemical cell (case 4) being more economical than the case where brine was used as feed to the electrochemical cell and supplemented with additional NaCl (case 3).

Prophetic Example:

A water treatment system was configured as illustrated in FIG. 13. The system was operating with a baseline level of organic contaminants in the source of feed and providing product water to the point of use with a baseline purity.
An event occurred in which either a sensor measuring a concentration of contaminants in the feed water or a sensor measuring a concentration of contaminants in the product water began to provide an indication of the contaminant concentration rising. The controller of the system received the sensor measurements and automatically took action to maintain the product water purity at a desired level. The controller caused additional chloride salt to be added to the source of salt or to the stream from the source of salt being directed in the electrochlorination cell. To produce additional NaOCl from the higher salt concentration solution, the controller increased the power applied across the electrodes of the electrochlorination cell. The concentration of NaOCl in the recirculation loop increased as a result. The valve proving fluid communication from the recirculation loop to the stream of water to be treated was partially opened or opened more fully than under baseline operating conditions to allow NaOCl containing solution (or a greater amount of NaOCl containing solution) from the recirculation loop to mix with the water to be treated. To create additional free radicals from the higher concentration of NaOCl in the water to be treated entering the UV AOP reactor to destroy the additional contaminants and provide the desired purity of the product water, the controller caused the intensity of radiation from the UV lamps in the UV AOP reactor to increase or decreased flow rate of the water to be treated through the UV AOP reactor to provide the water to be treated with a greater dose of UV radiation. The purity of the product water was maintained at the desired level even though the concentration of contaminants in the feed water was elevated as compared to baseline operating conditions.
After a period of time the concentration of contaminants in the feed water returned to baseline levels. This was detected by one of the sensors in the system and communicated to the controller. The controller caused the amount of salt added to the source of salt or to the stream from the source of salt being directed in the electrochlorination cell to return to baseline levels and also caused the power applied to the electrochemical cell and UV AOP reactor to return to baseline levels. The controller also adjusted the flow of NaOCl containing solution from the recirculation loop into the water to be treated to return to baseline levels if this had been adjusted upward after detecting the higher concentration of contaminants.
At a later period of time, the contaminant concentration level in the feed water decreased. This was detected by a sensor of the system and communicated to the controller. To save energy and material costs, based on how it was programmed, the controller could perform one or more actions including reducing power applied to the electrochemical cell, reducing power applied to the UV AOP reactor, reducing a concentration of salt supplied to the electrochemical cell, increasing the flow rate of the feed water in to the system, or reducing an amount of NaOCl containing solution fed to the water to be treated from the recirculation loop.
The phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.
Having thus described several aspects of at least one embodiment, it is to be appreciated various alterations, modifications, and improvements will readily occur to those skilled in the art.

**Claims**

1. A water treatment system comprising:

   an actinic radiation reactor (825)

a first conduit in fluid communication with the inlet of the actinic radiation reactor for introducing water to be treated (805)

a concentric tube electrode (CTE) electrochemical cell (815) wherein the electrochemical cell is configured to be in fluid communication with a source of electrolyte including a chloride-containing solution (905) so as to produce a chlorinated effluent (1010) including sodium hypochlorite;

a recirculation conduit (1015) configured to return the chlorinated effluent (1010) from the outlet of the electrochemical cell (815) to an inlet of the electrochemical cell (815) to form a recirculated brine solution;

a second conduit equipped with a valve (1030) and providing selective fluid communication from the recirculation conduit (1015) to a point of introduction in the first conduit upstream of the inlet of the actinic radiation reactor (825).

wherein said valve (1030) may be in a closed stated, wherein the chlorinated effluent (1010) is recirculated through the recirculation loop (1050) from the outlet of the electrochemical cell (815) back to the inlet of the electrochemical cell (815), said valve (1030) being configured to transition from said closed state to an at least partially open state, in response to a concentration of sodium hypochlorite in the recirculated chlorinated effluent (1010) reaching a predetermined level, so as to release a high concentration sodium hypochlorite solution (1035) to the point of introduction and to mix it with the water to be treated (805) to form a chlorinated effluent (820) which is introduced in the actinic radiation reactor (825).

2. The system of claim 1, wherein the actinic radiation reactor (825) is an ultraviolet advanced oxidation process (AOP) reactor.

3. The system of claim 1, further comprising a sensor (910), configured to measure a concentration of one or more contaminants in water, the sensor positioned one of upstream of the actinic radiation reactor or downstream of the actinic radiation reactor.

4. The system of claim 3, further comprising a controller (1500) in communication with the sensor and configured to adjust one or more operating parameters of the system responsive to a measured concentration of the one or more contaminants.

5. The system of claim 4, wherein the one or more operating parameters including one of power applied to the electrochemical cell, power applied to the actinic radiation reactor, and flow rate of electrolyte or effluent through one of the electrochemical cell or actinic radiation reactor.

6. The system of claim 5, wherein the controller is further configured to regulate a rate of introduction of a chloride salt into the electrolyte upstream of the electrochemical cell responsive to the measured concentration of the one or more contaminants.

7. The system of claim 4, wherein the controller is operatively connected to one or more sensors, the one or more sensors configured to measure one or more of flow rate of the water to be treated, a concentration of a contaminant in the water to be treated, a concentration of sodium hypochlorite in the water to be treated, a purity of product water exiting the actinic radiation reactor, a flow rate of the product water exiting the actinic radiation reactor, or a concentration of sodium hypochlorite in the recirculated brine solution.

8. The system of claim 7, wherein the controller is configured to adjust one or more operating parameters of the system based on one or more signals received from the one or more sensors, the one or more operating parameters including one or more of the state of the valve, power applied to the electrochemical cell, power applied to the actinic radiation reactor, flow rate of electrolyte through the electrochemical cell, flow rate of water to be treated through the actinic radiation reactor, or dosage of radiation applied to the water to be treated in the actinic radiation reactor.

9. The system of claim 8, wherein the one or more sensors is configured to measure the concentration of the sodium hypochlorite in the recirculated brine solution and the controller is configured to receive an indication of the concentration of the sodium hypochlorite in the recirculated brine solution from the sensor and send a signal to the valve to at least partially open responsive to the concentration of the sodium hypochlorite being at or above the predetermined level.

10. The system of claim 8, wherein the controller is further configured to set the predetermined level based on one or both of the concentration of the contaminant in the water to be treated or a desired purity of the product water.

11. The system of claim 8, wherein the controller is further configured to set the predetermined level based on a desired dosage of UV radiation to be applied to the water to be treated in the actinic radiation reactor.

12. The system of claim 8, wherein the controller is further configured to set the dosage of UV radiation to be applied to the water to be treated in the actinic radiation reactor based on one or more of the predetermined level, the concentration of the contaminant in the water to be treated, the flow rate of the water to be treated, or a desired purity of the product water.

13. The system of claim 8, wherein the controller is further configured to set the power applied to the electrochemical cell based on one or both of the concentration of the contaminant in the water to be treated or a desired purity of the product water.

14. The system of claim 8, wherein the controller is further configured to set the dosage of UV radiation to be applied to the water to be treated in the actinic radiation reactor based on the concentration of the contaminant in the water to be treated and a desired purity of the product water.

15. The system of claim 8, wherein the controller is further configured to set an amount of chloride to be introduced into the electrolyte based on the predetermined level.

**Patentansprüche**

1. Ein Wasseraufbereitungssystem, das Folgendes beinhaltet:

   einen Reaktor (825) auf Basis aktinischer Strahlung;
   eine erste Leitung in Fluidkommunikation mit dem Einlass des Reaktors auf Basis aktinischer Strahlung zum Einführen von aufzubereitendem Wasser (805);
   eine elektrochemische Zelle (815) mit konzentrischer Röhrenelektrode (CTE), wobei die elektrochemische Zelle konfiguriert ist, um in Fluidkommunikation mit einer Quelle von Elektrolyt zu stehen, die eine chloridhaltige Lösung (905) umfasst, um einen chlorierten Ausfluss (1010) zu erzeugen, der Natriumhypochlorit umfasst;
   eine Rezirkulationsleitung (1015), die konfiguriert ist, um den chlorierten Ausfluss (1010) aus dem Auslass der elektrochemischen Zelle (815) zu einem Einlass der elektrochemischen Zelle (815) zurückzuführen, um eine rezirkulierte Salzlösung zu bilden;
   eine zweite Leitung, die mit einem Ventil (1030) ausgestattet ist und selektive Fluidkommunikation von der Rezirkulationsleitung (1015) zu einem Punkt der Einführung in die erste Leitung stromaufwärts von dem Einlass des Reaktors (825) auf Basis aktinischer Strahlung bereitstellt;
   wobei das Ventil (1030) in einem geschlossenen Zustand sein kann, wobei der chlorierte Ausfluss (1010) durch die Rezirkulationsschleife (1050) von dem Auslass der elektrochemischen Zelle (815) zurück zu dem Einlass der elektrochemischen Zelle (815) rezirkuliert wird, wobei das Ventil (1030) konfiguriert ist, um von dem geschlossenen Zustand in einen mindestens teilweise geöffneten Zustand überzugehen, als Antwort darauf, dass eine Konzentration von Natriumhypochlorit in dem rezirkulierten chlorierten Ausfluss (1010) ein vorbestimmtes Niveau erreicht, um eine hohe Konzentration von Natriumhypochloritlösung (1035) zu dem Punkt der Einführung freizusetzen und sie mit dem aufzubereitenden Wasser (805) zu mischen, um einen chlorierten Ausfluss (820) zu bilden, der in den Reaktor (825) auf Basis aktinischer Strahlung eingeführt wird.

2. System gemäß Anspruch 1, wobei der Reaktor (825) auf Basis aktinischer Strahlung ein Reaktor mit Ultraviolett verwendender erweiterter Oxidation (AOP) ist.

3. System gemäß Anspruch 1, ferner beinhaltend einen Sensor (910), der konfiguriert ist, um eine Konzentration von einem oder mehreren Kontaminanten in Wasser zu messen, wobei der Sensor eines von stromaufwärts des Reaktors auf Basis aktinischer Strahlung oder stromabwärts des Reaktors auf Basis aktinischer Strahlung positioniert ist.

4. System gemäß Anspruch 3, ferner beinhaltend eine Steuereinheit (1500) in Kommunikation mit dem Sensor und konfiguriert, um einen oder mehrere Betriebsparameter des Systems als Antwort auf eine gemessene Konzentration des einen oder der mehreren Kontaminanten einzustellen.

5. System gemäß Anspruch 4, wobei der eine oder die mehreren Betriebsparameter eines von an die elektrochemische Zelle angelegter Energie, an den Reaktor auf Basis aktinischer Strahlung angelegter Energie und Durchflussrate von Elektrolyt oder Ausfluss durch eines von der elektrochemischen Zelle oder dem Reaktor auf Basis aktinischer Strahlung umfasst.

6. System gemäß Anspruch 5, wobei die Steuereinheit ferner konfiguriert ist, um eine Einführungsrate eines Chloridsalzes in den Elektrolyten stromaufwärts von der elektrochemischen Zelle als Antwort auf die gemessene Konzentration des einen oder der mehreren Kontaminanten zu regulieren.

7. System gemäß Anspruch 4, wobei die Steuereinheit mit einem oder mehreren Sensoren operativ verbunden ist, wobei der eine oder die mehreren Sensoren konfiguriert sind, um eines oder mehrere von einer Durchflussrate des aufzubereitenden Wassers, einer Konzentration eines Kontaminanten in dem aufzubereitenden Wasser, einer Konzentration von Natriumhypochlorit in dem aufzubereitenden Wasser, einer Reinheit von Reinwasser, das aus dem Reaktor auf Basis aktinischer Strahlung austritt, einer Durchflussrate des Reinwassers, das aus dem Reaktor auf Basis aktinischer Strahlung austritt, oder einer Konzentration von Natriumhypochlorit in der rezirkulierten Salzlösung zu messen.

8. System gemäß Anspruch 7, wobei die Steuereinheit konfiguriert ist, um einen oder mehrere Betriebsparameter des Systems basierend auf einem oder mehreren Signalen, die von dem einen oder den mehreren Sensoren empfangen werden, einzustellen, wobei der eine oder die mehreren Betriebsparameter eines oder mehrere von dem Zustand des Ventils, der an die elektrochemische Zelle angelegten Energie, der an den Reaktor auf Basis aktinischer Strahlung angelegten Energie, der Durchflussrate von Elektrolyt durch die elektrochemische Zelle, der Durchflussrate von aufzubereitendem Wasser durch den Reaktor auf Basis aktinischer Strahlung oder der Dosierung von auf das aufzubereitende Wasser in dem Reaktor auf Basis aktinischer Strahlung angewendeter Strahlung umfassen.

9. System gemäß Anspruch 8, wobei der eine oder die mehreren Sensoren konfiguriert sind, um die Konzentration des Natriumhypochlorits in der rezirkulierten Salzlösung zu messen, und die Steuereinheit konfiguriert ist, um eine Angabe der Konzentration des Natriumhypochlorits in der rezirkulierten Salzlösung von dem Sensor zu empfangen und ein Signal an das Ventil zu senden, sich mindestens teilweise zu öffnen, als Antwort darauf, dass die Konzentration des Natriumhypochlorits auf oder über einem vorbestimmten Niveau liegt.

10. System gemäß Anspruch 8, wobei die Steuereinheit ferner konfiguriert ist, um das vorbestimmte Niveau festzusetzen, basierend auf einem oder beiden von der Konzentration des Kontaminanten in dem aufzubereitenden Wasser oder einer gewünschten Reinheit des Reinwassers.

11. System gemäß Anspruch 8, wobei die Steuereinheit ferner konfiguriert ist, um das vorbestimmte Niveau festzusetzen, basierend auf einer gewünschten Dosierung von auf das aufzubereitende Wasser in dem Reaktor auf Basis aktinischer Strahlung anzuwendender UV-Strahlung.

12. System gemäß Anspruch 8, wobei die Steuereinheit ferner konfiguriert ist, um die Dosierung von auf das aufzubereitende Wasser in dem Reaktor auf Basis aktinischer Strahlung anzuwendender UV-Strahlung festzusetzen, basierend auf einem oder mehreren von dem vorbestimmten Niveau, der Konzentration des Kontaminanten in dem aufzubereitenden Wasser, der Durchflussrate des aufzubereitenden Wassers oder einer gewünschten Reinheit des Reinwassers.

13. System gemäß Anspruch 8, wobei die Steuereinheit ferner konfiguriert ist, um die an die elektrochemische Zelle angelegte Leistung festzusetzen, basierend auf einem oder beiden von der Konzentration des Kontaminanten in dem aufzubereitenden Wasser oder einer gewünschten Reinheit des Reinwassers.

14. System gemäß Anspruch 8, wobei die Steuereinheit ferner konfiguriert ist, um die Dosierung von auf das aufzubereitende Wasser in dem Reaktor auf Basis aktinischer Strahlung anzuwendender UV-Strahlung festzusetzen, basierend auf der Konzentration des Kontaminanten in dem aufzubereitenden Wasser und einer gewünschten Reinheit des Reinwassers.

15. System gemäß Anspruch 8, wobei die Steuereinheit ferner konfiguriert ist, um eine Menge von in den Elektrolyten einzuführendem Chlorid festzusetzen, basierend auf dem vorbestimmten Niveau.

**Revendications**

1. Un système de traitement de l'eau comprenant :

   un réacteur à rayonnement actinique (825)
   un premier conduit, en communication fluidique avec l'admission du réacteur à rayonnement actinique, servant à introduire de l'eau devant être traitée (805) une cellule électrochimique (815) à électrode à tube concentrique (CTE, *concentric tube electrode*) où la cellule électrochimique est configurée pour être en communication fluidique avec une source d'électrolyte incluant une solution contenant du chlorure (905) de sorte à produire un effluent chloré (1010) incluant de l'hypochlorite de sodium ; un conduit de recirculation (1015) configuré pour renvoyer l'effluent chloré (1010) de l'évacuation de la cellule électrochimique (815) à une admission de la cellule électrochimique (815) afin de former une solution de saumure recirculée ;
   un deuxième conduit muni d'une vanne (1030) et fournissant une communication fluidique sélective du conduit de recirculation (1015) à un point d'introduction dans le premier conduit en amont de l'admission du réacteur à rayonnement actinique (825) où ladite vanne (1030) peut être dans un état fermé, où l'effluent chloré (1010) est recirculé à travers la boucle de recirculation (1050) de l'évacuation de la cellule électrochimique (815) en retour vers l'admission de la cellule électrochimique (815), ladite vanne (1030) étant configurée pour passer dudit état fermé à un état au moins partiellement ouvert, en réponse au fait qu'une concentration d'hypochlorite de sodium dans l'effluent chloré (1010) recirculé atteint un niveau prédéterminé, de sorte à décharger une solution d'hypochlorite de sodium à concentration élevée (1035) vers le point d'introduction et à la mélanger avec l'eau devant être traitée (805) pour former un effluent chloré (820) qui est introduit dans le réacteur à rayonnement actinique (825).

2. Le système de la revendication 1, où le réacteur à rayonnement actinique (825) est un réacteur à processus d'oxydation avancée (AOP, *advanced oxidation process*) aux ultraviolets.

3. Le système de la revendication 1, comprenant en outre un capteur (910), configuré pour mesurer une concentration d'un ou de plusieurs contaminants dans de l'eau, le capteur étant positionné soit en amont du réacteur à rayonnement actinique, soit en aval du réacteur à rayonnement actinique.

4. Le système de la revendication 3, comprenant en outre un organe de commande (1500) en communication avec le capteur et configuré pour régler un ou plusieurs paramètres de fonctionnement du système en réponse à une concentration mesurée des un ou plusieurs contaminants.

5. Le système de la revendication 4, où les un ou plusieurs paramètres de fonctionnement incluent soit une puissance appliquée à la cellule électrochimique, soit une puissance appliquée au réacteur à rayonnement actinique, soit un débit d'électrolyte ou d'effluent à travers soit la cellule électrochimique, soit le réacteur à rayonnement actinique.

6. Le système de la revendication 5, où l'organe de commande est configuré en outre pour réguler une vitesse d'introduction d'un sel de chlorure dans l'électrolyte en amont de la cellule électrochimique en réponse à la concentration mesurée des un ou plusieurs contaminants.

7. Le système de la revendication 4, où l'organe de commande est raccordé fonctionnellement à un ou plusieurs capteurs, les un ou plusieurs capteurs étant configurés pour mesurer un ou plusieurs éléments parmi un débit de l'eau devant être traitée, une concentration d'un contaminant dans l'eau devant être traitée, une concentration d'hypochlorite de sodium dans l'eau devant être traitée, une pureté d'eau de process sortant du réacteur à rayonnement actinique, un débit de l'eau de process sortant du réacteur à rayonnement actinique, ou une concentration d'hypochlorite de sodium dans la solution de saumure recirculée.

8. Le système de la revendication 7, où l'organe de commande est configuré pour régler un ou plusieurs paramètres de fonctionnement du système sur la base d'un ou de plusieurs signaux reçus en provenance des un ou plusieurs capteurs, les un ou plusieurs paramètres de fonctionnement incluant un ou plusieurs éléments parmi l'état de la vanne, une puissance appliquée à la cellule électrochimique, une puissance appliquée au réacteur à rayonnement actinique, un débit d'électrolyte à travers la cellule électrochimique, un débit d'eau devant être traitée à travers le réacteur à rayonnement actinique, ou un dosage de rayonnement appliqué à l'eau devant être traitée dans le réacteur à rayonnement actinique.

9. Le système de la revendication 8, où les un ou plusieurs capteurs sont configurés pour mesurer la concentration de l'hypochlorite de sodium dans la solution de saumure recirculée et l'organe de commande est configuré pour recevoir une indication de la concentration de l'hypochlorite de sodium dans la solution de saumure recirculée en provenance du capteur et envoyer un signal à la vanne afin qu'elle s'ouvre au moins partiellement en réponse au fait que la concentration de l'hypochlorite de sodium est à un niveau prédéterminé ou au-dessus de celui-ci.

10. Le système de la revendication 8, où l'organe de commande est configuré en outre pour établir le niveau prédéterminé sur la base soit de la concentration du contaminant dans l'eau devant être traitée, soit d'une pureté souhaitée de l'eau de process, soit des deux.

11. Le système de la revendication 8, où l'organe de commande est configuré en outre pour établir le niveau prédéterminé sur la base d'un dosage souhaité de rayonnement UV devant être appliqué à l'eau devant être traitée dans le réacteur à rayonnement actinique.

12. Le système de la revendication 8, où l'organe de commande est configuré en outre pour établir le dosage de rayonnement UV devant être appliqué à l'eau devant être traitée dans le réacteur à rayonnement actinique sur la base d'un ou de plusieurs éléments parmi le niveau prédéterminé, la concentration du contaminant dans l'eau devant être traitée, le débit de l'eau devant être traitée, ou une pureté souhaitée de l'eau de process.

13. Le système de la revendication 8, où l'organe de commande est configuré en outre pour établir la puissance appliquée à la cellule électrochimique sur la base soit de la concentration du contaminant dans l'eau devant être traitée, soit d'une pureté souhaitée de l'eau de process, soit des deux.

14. Le système de la revendication 8, où l'organe de commande est configuré en outre pour établir le dosage de rayonnement UV devant être appliqué à l'eau devant être traitée dans le réacteur à rayonnement actinique sur la base de la concentration du contaminant dans l'eau devant être traitée et d'une pureté souhaitée de l'eau de process.

15. Le système de la revendication 8, où l'organe de commande est configuré en outre pour établir une quantité de chlorure devant être introduite dans l'électrolyte sur la base du niveau prédéterminé.

FIG. 1A

Feed electrolyte solution

Product solution

100

102

102

104
(Bipolar inner electrode)

FIG. 1B

FIG. 2A

Sea water
or brine

Na Cl

$H_2O$

Cl$_2$ Cl$_2$ Cl$_2$

$H_2$ $H_2$ $H_2$

Na Cl

NaOCl

$H_2$

| | |
|---|---|
| ⬚ | Anode (titanium with platinum or MMO coating) |
| ⬚ | Cathode (titanium) |
| ⇨ | Fluid flow |
| → | Current |
| ⇢ | Bypass Current |

FIG. 2B

Na Cl
H₂O

Sea water
or brine

Na Cl
NaOCl
H₂
H₂O

| | Anode (titanium with platinum or MMO coating) |
| | Cathode (titanium) |
| | Fluid flow |
| | Current |
| | Bypass Current |

FIG. 2C

FIG. 3

FIG. 4

EP 3 921 285 B1

FIG. 5

FIG. 6

**FIG. 7**

EP 3 921 285 B1

FIG. 8

FIG. 9A

FIG. 9B

**1,4-dioxane removal with 100 percent UV power**

FIG. 10

EP 3 921 285 B1

| Amperage (A) | 9 |
|---|---|
| Voltage (V) | 24 |
| Power (kW) | 0.216 |
| Area (m2) | 0.01 |
| Current density (A/m2) | 862 |

| Nominal Flow Rate | H20 Flow (gpm) | 3 | 5 | 7 |
|---|---|---|---|---|
| | H20 Flow (lpm) | 11.4 | 18.9 | 26.5 |

H202 Parameters:

| Target H202 Generation | Mass Rate (mg/min) | 95.2 | 95.2 | 95.2 |
|---|---|---|---|---|
| | Concentration (mg/l) | 8.4 | 5.0 | 3.6 |

*O2 In-solution would likely be insufficient to generate the above

(A) ⟶

NaOCl Parameters:

| In-solution Cl-(Waterloo) | Mass Rate (mg/min) | 11.1 | 6.7 | 4.8 |
|---|---|---|---|---|
| Target NaOCl Generation | Mass Rate (mg/min) | 198.4 | 198.4 | 198.4 |
| | Concentration (mg/l) | 17.5 | 10.5 | 7.5 |

*Note: Cl-In solution would be insufficient to generate the above

FIG. 10 (continued)

810

805    NaCl -> NaOCl    820    UV Reactor    830    835

Source of Feed

815    825

Point of Use

## FIG. 11

905

Source of Salt

810    915    920    NaCl -> NaOCl    910    UV Reactor    835
              NaCl -> NaOCl    820    830

Source of Feed

910    805    815    910    825    910

Point of Use

## FIG. 12

910    1025  1015
905                    1010   1030

Source of Salt    NaCl -> NaOCl

1005 1020    815    815    1035

810    910    910    UV Reactor    835
                              830

Source of Feed

805    820    825    910

Point of Use

## FIG. 13

1500

Processor ~1502

1514 — Sensors

Storage —1512

Interconnect system

1506

Input device
1508 —

Output device ~1510

Memory ~1504

## FIG. 14

1512

O

110101

1602

1604

110101

1502

## FIG. 15

1710

1705

1715

1720

## FIG. 16

FIG. 17

FIG. 18

Feed in  NaCl -> NaOCl  UV Reactor

Case 1

Brine Tank

Feed in  NaCl -> NaOCl  UV Reactor

Case 2

FIG. 19a

NaCl -> NaOCl

Source of Salt

Feed in

Case 3

UV Reactor

Brine Tank

Feed in

Case 5

UV Reactor

# FIG. 19b

FIG. 20

EP 3 921 285 B1

FIG. 21

EP 3 921 285 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107973462 A
- FR 2994174 B1
- WO 2016133985 A1

**Non-patent literature cited in the description**

- **LEGRINI, O ; OLIVEROS, E. ; BRAUN, A. M**. Photochemical Processes for Water Treatment. *Chm. Rev*, 1993, vol. 1093 (93), 671-698
- **BOLTON et al.** Figures of Merit for the technical development and application of Advanced Oxidation Processes. *J. of Advanced Oxidation Technologies*, 1996, vol. 1, 113-17
- **MALATO et al.** Photocatalysis with solar energy at a pilot-plant scale: an overview.. *Applied Catalysis B: Environmental*, 2002, vol. 37, 1-15
- **JING JIN et al.** Assessment of the UV/Chlorine process as an advanced oxidation process. *Water Research*, 2011, vol. 45, 1890-1896
- **MICHAEL J. WATTS et al.** Chlorine photolysis and subsequent OH radical production during UV treatment of chlorinated water. *Water Research*, 2007, vol. 41, 2871-2878
- **LEGRINI, O ; OLIVEROS, E ; BRAUN, A. M**. Photochemical Processes for Water Treatment. *Chm. Rev.*, 1993, vol. 1093, 671-698